(19) Europäisches Patentamt
European Patent Office
Office européen des brevets

(11) **EP 3 804 408 B1**

(12) **FASCICULE DE BREVET EUROPEEN**

(45) Date de publication et mention de la délivrance du brevet:
**23.04.2025 Bulletin 2025/17**

(21) Numéro de dépôt: **19748854.7**

(22) Date de dépôt: **03.06.2019**

(51) Classification Internationale des Brevets (IPC):
*H04W 40/14* *(2009.01)*    *H04W 84/18* *(2009.01)*

(52) Classification Coopérative des Brevets (CPC):
**H04W 40/14;** H04W 84/18

(86) Numéro de dépôt international:
**PCT/FR2019/051292**

(87) Numéro de publication internationale:
**WO 2019/234333 (12.12.2019 Gazette 2019/50)**

(54) **PROCÉDÉ DE SÉLECTION D'UNE ROUTE DANS UN RÉSEAU AD HOC**

VERFAHREN ZUR AUSWAHL EINER ROUTE IN EINEM AD-HOC-NETZWERK

METHOD OF SELECTING A ROUTE IN AN AD HOC NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2018 FR 1854919**

(43) Date de publication de la demande:
**14.04.2021 Bulletin 2021/15**

(73) Titulaire: **Orange**
**92130 Issy-les-Moulineaux (FR)**

(72) Inventeurs:
• **PAILLET, Eric**
**92326 Châtillon Cedex (FR)**
• **TREBOUET VOISIN, Lucas**
**92326 Châtillon Cedex (FR)**

(74) Mandataire: **Cabinet Beau de Loménie**
**158, rue de l'Université**
**75340 Paris Cedex 07 (FR)**

(56) Documents cités:
**US-A1- 2004 029 553    US-A1- 2012 134 298**

• **XIANFENG LI ET AL: "LEPR: Link Stability Estimation-based Preemptive Routing protocol for Flying Ad Hoc Networks", 2017 IEEE SYMPOSIUM ON COMPUTERS AND COMMUNICATIONS (ISCC), IEEE, 3 July 2017 (2017-07-03), pages 1079 - 1084, XP033148187, DOI: 10.1109/ISCC.2017.8024669**
• **AMRI H A ET AL: "Scalability of MANET routing protocols for heterogeneous and homogenous networks", COMPUTERS & ELECTRICAL ENGINEERING, PERGAMON PRESS, GB, vol. 36, no. 4, 1 July 2010 (2010-07-01), pages 752 - 765, XP027065128, ISSN: 0045-7906, [retrieved on 20090103], DOI: 10.1016/ J.COMPELECENG.2008.11.008**

**EP 3 804 408 B1**

**Description**

<u>Arrière-plan de l'invention</u>

L'invention se rapporte au domaine général des communications entre plusieurs dispositifs ou terminaux, tels que par exemple des ordinateurs, des téléphones mobiles, des tablettes numériques, etc.

Elle concerne plus particulièrement les communications pair-à-pair (ou P2P pour « Peer-to-Peer » en anglais) entre plusieurs dispositifs ou terminaux, désignés plus généralement par « nœuds » par la suite. On entend par communication pair-à-pair entre deux nœuds, l'échange de données entre ces deux nœuds sans passer typiquement par un serveur central. Aucune limitation n'est attachée au type de données échangées entre les nœuds (voix, texte, etc.) lors d'une communication pair-à-pair. Cette communication peut consister en un échange direct de données entre les deux nœuds (on parle alors de communication D2D ou « Device-to-Device » en anglais), ou d'un échange via un ou plusieurs nœuds intermédiaires mettant en œuvre deux à deux des communications D2D, ces nœuds intermédiaires formant une route entre les deux nœuds cherchant à communiquer ensemble. L'ensemble des nœuds ainsi connectés pair-à-pair forment un réseau maillé ou réseau mesh sans hiérarchie centrale, aussi appelé réseau ad hoc. Quand des nœuds du réseau ad hoc sont mobiles, on parle de réseau MANET pour Mobile Adhoc NETwork en anglais.

Les nœuds au sein d'un même réseau ad hoc peuvent utiliser différentes technologies de connectivité pour détecter la présence de nœuds voisins, identifier les applications ou les services mis à disposition par ces nœuds voisins, et se connecter entre eux en vue de communiquer pair-à-pair. Ils peuvent notamment s'appuyer indifféremment sur les technologies Bluetooth, WiFi (Wireless Fidelity), WiFi Direct, LTE (Long Term Evolution) Direct, etc. Ils peuvent en outre être connectés à des éléments externes au réseau ad hoc, comme par exemple à d'autres dispositifs appartenant à des réseaux d'opérateurs (ex. réseaux 3G, 4G, 5G, etc.) ou à des réseaux privés, etc., pour accéder par exemple au réseau public Internet.

Si les réseaux ad hoc et plus particulièrement les réseaux MANET possèdent la propriété de s'auto-organiser rapidement, ils sont également particulièrement instables : les nœuds qui les composent sont en effet pour certains mobiles, et donc susceptibles de disparaître ou d'apparaître brusquement dans le réseau au gré de leurs déplacements. Le routage des messages entre deux nœuds d'un réseau ad hoc peut donc s'avérer une tâche complexe.

Plusieurs protocoles de routage proposés par le groupe de standardisation MANET ont été normalisés au sein de l'IETF (Internet Engineering Task Force). Ces protocoles de routage peuvent être classés en trois catégories principales.

Une première catégorie regroupe les protocoles de routage dits proactifs. Ces protocoles s'attachent à ce que chaque nœud du réseau ad hoc tienne à jour sa connaissance de la topologie du réseau afin d'être en mesure de déterminer rapidement les routes disponibles au sein du réseau pour échanger des données avec d'autres nœuds. A cet effet, les protocoles de routage proactifs prévoient la diffusion périodique sur tout le réseau ad hoc, par chaque nœud du réseau, de messages de contrôle (messages « Hello »), en parallèle des messages de transmission de données, déclarant l'état des liens que chaque nœud entretient avec ses nœuds voisins. La diffusion de ces messages de contrôle permet à chaque nœud du réseau ad hoc de découvrir toutes les routes valides (i.e. disponibles) vers tous les nœuds du réseau, et donc de tenir à jour une table de routage identifiant ces routes et tenant compte des changements de topologie susceptibles d'affecter le réseau.

Des exemples de protocoles de routage proactifs sont les protocoles DSDV (pour Dynamic destination Sequences Distance Vector), GSR (pour Global State Routing) ou encore OLSR (pour Optimized Link State Routing Protocol). Ces protocoles présentent l'avantage de permettre un routage efficace des messages de données au sein de réseaux ad hoc de petites dimensions, en raison des tables de routage maintenues à jour par chaque nœud du réseau. Toutefois, en raison des nombreux messages de contrôle (pour certains inutiles) diffusés périodiquement sur le réseau et du maintien de toutes les routes possibles sur le réseau même si celles-ci ne sont pas utilisées, leur efficacité diminue à mesure que la taille du réseau ad hoc augmente.

Une deuxième catégorie de protocoles comprend les protocoles de routage dits réactifs. Par opposition aux protocoles de routage proactifs, les protocoles de routage réactifs déterminent et maintiennent à jour les routes disponibles au sein du réseau ad hoc en fonction des besoins des nœuds désireux de transmettre des données sur le réseau. Des messages de contrôle visant à découvrir les routes disponibles sur le réseau (messages « Route Request ») sont envoyés par un nœud uniquement lorsque celui-ci a besoin d'identifier une route pour émettre des données à destination d'un autre nœud, et qu'il ne dispose pas d'une telle route déjà stockée dans sa table de routage. Les tables de routage maintenues par les nœuds du réseau ne sont donc remplies qu'à la demande de ces derniers. Chaque nœud du réseau n'a qu'une connaissance partielle de la topologie du réseau se limitant aux nœuds avec lesquels il a déjà communiqué.

Des exemples de protocoles de routage réactifs sont les protocoles DSR (pour Dynamic Source Routing) et AODV (pour Ad Hoc On-Demand Distance Vector). L'avantage majeur de ces protocoles de routage réactifs est qu'ils ne résultent pas en une inondation excessive du réseau avec des messages de contrôle diffusés de manière intempestive. Ils sont donc particulièrement bien adaptés pour des réseaux denses. En revanche, le temps mis par un nœud pour déterminer une route peut s'avérer long, y compris lorsque le nœud destinataire du message se trouve dans son voisinage.

Une troisième catégorie de protocoles mixe les approches proactive et réactive : il s'agit des protocoles de routage dits hybrides. Ces protocoles s'appuient sur l'approche proactive pour déterminer les routes dans le voisinage des nœuds (i.e. situés à quelques sauts des nœuds, par exemple deux ou trois sauts). Au-delà de ce voisinage, ils utilisent l'approche réactive pour la recherche des routes (i.e. recherche à la demande, seulement en cas de besoin spécifique des nœuds). Un exemple de protocole de routage hybride est le protocole ZRP (Zone Routing Protocol).

Les protocoles de routage hybrides sont les protocoles qui sont privilégiés dans le cadre des réseaux comprenant des nœuds mobiles : ils permettent d'éviter l'inondation excessive des réseaux avec des messages de contrôle, et s'adaptent à la taille variable et potentiellement importante des réseaux ad hoc. Toutefois, s'ils permettent d'optimiser le routage des données à courte distance, le temps mis par un nœud pour découvrir une route permettant de joindre un autre nœud qui ne se trouve pas dans son voisinage peut s'avérer long (comme pour les protocoles de routage réactifs).

Les documents US 2012/134298, US 2004/029553, ainsi que le document Xianfeng Li et al : « LEPR : Link Stability Estimation-based Preemptive Routing protocol for Flying Ad Hoc Networks" 2017 IEEE SYMPOSIUM ON COMPUTERS AND COMMUNICATIONS (ISCC), décrivent tous des procédés de découvertes de routes dans un réseau ad hoc et de maintien à jour de tables de routage dans ce réseau.

Il existe donc un besoin d'améliorer les mécanismes de routage proposés dans l'état de la technique, en particulier dans le contexte des réseaux impliquant des nœuds mobiles.

## Objet et résumé de l'invention

L'invention répond notamment à ce besoin en proposant un procédé de sélection d'une route dans un réseau ad hoc destiné à être mis en œuvre par un nœud de ce réseau, dit « premier nœud », ce procédé de sélection comprenant :

- une étape de maintien à jour d'une table de routage contenant au moins une route disponible au sein du réseau ad hoc, chaque route comprenant au moins un segment de route reliant directement entre eux deux nœuds du réseau ad hoc par un lien de connectivité dont un type est identifié dans la table de routage, ladite table de routage comprenant en outre, pour chaque nœud différent du premier nœud appartenant à un dit segment de route, une indication concernant un degré de mobilité de ce nœud, la table de routage étant maintenue à jour à partir d'informations extraites de messages de contrôle émis sur le réseau ad hoc destinés au premier nœud et de messages de contrôle émis sur le réseau transitant par le premier nœud ;
- lors de l'envoi d'un message de données par le premier nœud à destination d'un deuxième nœud du réseau ad hoc :

    ◦ une étape d'identification en utilisant la table de routage d'au moins une route disponible entre le premier nœud et le deuxième nœud pour envoyer le message de données ; et
    ◦ si plusieurs routes disponibles sont identifiées :

        ▪ une étape de détermination, pour chaque route disponible identifiée, d'un niveau de stabilité à partir des indications concernant le degré de mobilité des nœuds de la route et du type des liens de connectivité des segments de la route contenus dans la table de routage ; et
        ▪ une étape de sélection de la route disponible identifiée correspondant au meilleur niveau de stabilité déterminé.

Corrélativement, l'invention vise aussi un nœud d'un réseau ad hoc, dit « premier nœud », comprenant :

- un module de maintien à jour d'une table de routage contenant au moins une route disponible au sein du réseau ad hoc, chaque route comprenant au moins un segment de route reliant directement entre eux deux nœuds du réseau ad hoc par un lien de connectivité dont un type est identifié dans la table de routage, ladite table de routage comprenant en outre, pour chaque nœud différent du premier nœud appartenant à un dit segment de route, une indication concernant un degré de mobilité de ce nœud, la table de routage étant maintenue à jour à partir d'informations extraites de messages de contrôle émis sur le réseau ad hoc destinés au premier nœud et de messages de contrôle émis sur le réseau transitant par le premier nœud ;
- des modules activés lors de l'envoi d'un message de données par le premier nœud à destination d'un deuxième nœud du réseau ad hoc, et comprenant :

    ◦ un module d'identification, configuré pour identifier au moins une route disponible entre le premier nœud et le deuxième nœud en utilisant la table de routage maintenue à jour par le module de maintien à jour ;

∘ des modules activés si plusieurs routes disponibles entre le premier nœud et le deuxième nœud sont identifiées par le module d'identification, ces modules comprenant un module de détermination, configuré pour déterminer pour chaque route disponible identifiée, un niveau de stabilité à partir des indications concernant le degré de mobilité des nœuds de la route et du le type des liens de connectivité des segments de la route contenus dans la table de routage, et un module de sélection configuré pour sélectionner la route disponible identifiée correspondant au meilleur niveau de stabilité déterminé.

Aucune limitation n'est attachée à la nature des nœuds auxquels s'applique l'invention. En effet, l'invention s'applique à tout type de dispositif susceptible de communiquer pair-à-pair avec un autre dispositif, et muni d'une interface de connectivité lui permettant d'établir un lien de connectivité avec cet autre dispositif. Cette interface de connectivité peut être de différents types : il peut s'agir d'une interface filaire telle que par exemple une interface Ethernet, xDSL (Digital Subscriber Line), fibre optique, etc. ou sans fil, de type WiFI, Bluetooth, 2G, 3G, 4G, LTE, etc.

En outre, l'invention s'applique avantageusement à des réseaux ad hoc pouvant comporter des nœuds fixes comme des nœuds mobiles. Pour améliorer le routage au sein de tels réseaux, l'invention propose, lorsque plusieurs routes vers un nœud (deuxième nœud au sens de l'invention) sont disponibles au sein du réseau ad hoc (c'est-à-dire sont actives au sein du réseau), de sélectionner la route qui semble la plus stable en termes de connectivité. Cette stabilité de la route est évaluée en tenant compte :

- -de la stabilité supposée des liens de connectivité reliant les nœuds de la route entre eux. Cette stabilité supposée des liens de connectivité dépend du type de ces liens et notamment de la nature des interfaces de connectivité utilisées sur ces liens (tel que par exemple s'il s'agit d'une liaison WiFi, Bluetooth, Ethernet, etc.) ; et

- de la stabilité des nœuds à proprement parler traversés par la route. La stabilité des nœuds est estimée en fonction de leur degré de mobilité (par exemple « fixe » ou « mobile »). En effet, plus un nœud est mobile, plus sa pérennité au sein du réseau risque d'être limitée (il présente une probabilité d'apparaître et de disparaître soudainement évidemment supérieure à celle d'un nœud fixe), et donc plus sa stabilité est menacée.

En choisissant la route la plus stable comme proposé par l'invention pour router les messages de données échangés au sein du réseau ad hoc, on favorise la pérennité des routes empruntées, ce qui permet de diminuer le risque d'avoir des routes qui deviennent soudainement indisponibles et des échanges rompus ou retardés. La qualité des échanges au sein du réseau ad hoc et l'expérience utilisateur en résultant sont ainsi améliorées grâce à l'invention.

Pour permettre une sélection de la route la plus stable au sein du réseau, l'invention s'appuie sur un maintien à jour des tables de routage hébergées par les nœuds du réseau exploitant les informations de routage contenues dans tous les messages de contrôle diffusés sur le réseau et qui transitent par ces nœuds. De tels messages de contrôle sont typiquement des messages de contrôle classiquement diffusés dans le cadre d'un protocole de routage proactif et/ou des messages de contrôle classiquement diffusés dans le cadre d'un protocole de routage réactif, et comprennent notamment des messages d'annonce, des messages de découverte de routes, des messages de réponse aux messages de découverte ainsi que des messages d'erreur signalant une indisponibilité d'un nœud ou d'un lien du réseau ad hoc détectée par un autre nœud. Ainsi, contrairement à l'état de la technique, pour maintenir à jour la table de routage d'un nœud du réseau ad hoc, on ne se contente pas de tenir compte uniquement des messages d'annonce destinés à ce nœud et émis par ses voisins ou des messages envoyés en réponse aux messages de découverte de routes émis par le nœud, mais on tient compte de tous les messages de contrôle transitant (i.e. relayés) par ce nœud et qui ne lui sont pas directement destinés. En exploitant de façon continue ces messages de contrôle destinés ou transitant par le nœud, la pertinence et la validité des informations contenues dans sa table de routage sont améliorées. Ceci permet à chaque nœud du réseau d'identifier plus rapidement les changements de topologie de configuration du réseau, tant au niveau des nœuds qui le composent que des liens de connectivité existant entre ces nœuds.

Dans un mode particulier de réalisation, le procédé de sélection comprend en outre :

- une étape d'attribution d'un score de stabilité dit local à chaque type de lien de connectivité et à chaque type de degré de mobilité susceptibles d'être contenus dans la table de routage ; et
- une étape de calcul d'un score de stabilité dit global pour chaque route disponible identifiée reflétant le niveau de stabilité de cette route, ce score de stabilité global étant calculé à partir d'une somme pondérée des scores de stabilité locaux attribués aux liens de connectivité des segments de cette route en fonction de leur type et aux nœuds de cette route en fonction des indications concernant leur degré de mobilité contenues dans la table.

Ce mode de réalisation offre une manière simple et efficace d'évaluer la stabilité d'une route. Elle permet une différenciation facile, via les scores de stabilité locaux attribués, des différents liens de connectivité des segments de chaque route ainsi que des degrés de mobilité des nœuds de cette route.

Par exemple, lors de l'étape d'attribution :

- le score de stabilité local attribué à un lien de connectivité de type filaire est meilleur que le score de stabilité local attribué à un lien de connectivité de type sans fil ; et/ou
- le score de stabilité local attribué à un degré de mobilité de type fixe est meilleur que le score de stabilité local attribué à un degré de mobilité de type mobile.

Ceci permet de privilégier les liens de connectivité et les nœuds qui ont une meilleure stabilité par nature, à savoir les connectivités de type filaire et les nœuds fixes.

On peut en outre, pour un même type de lien de connectivité (par exemple, un lien de connectivité de type sans fil), attribuer des scores de stabilité locaux différents selon l'interface de connectivité utilisée (par exemple WiFI, Bluetooth, WiFi-Direct, etc.). Ainsi par exemple, on peut attribuer un score de stabilité local supérieur à une liaison WiFi qu'à une liaison Bluetooth (de portée inférieure), ou par rapport à une liaison WiFI-Direct (plus instable par expérience qu'une liaison WiFi).

Dans une variante de réalisation, le score de stabilité local attribué à un type de lien de connectivité peut dépendre d'une interface de connectivité utilisée sur ce lien et d'un débit théorique atteignable sur ce type de lien.

Ceci permet d'ajouter une granularité supplémentaire aux scores de stabilité locaux attribués en fonction du type de lien de connectivité utilisé. Par exemple, pour un même type de lien de connectivité (ex. pour une interface de type WiFI), on peut attribuer un score de stabilité local qui diffère en fonction du débit théorique atteignable sur ce type de lien, et notamment attribuer un meilleur score de stabilité local à un lien sur lequel le débit théorique est plus fort.

De façon similaire, on peut ajuster la granularité des scores de stabilité locaux attribués en fonction du degré de mobilité des nœuds de sorte à tenir compte de la nature de ces nœuds (i.e. s'agit-il d'une box, d'une station de base associée à une antenne relai d'un réseau de télécommunications mobile, d'un téléphone intelligent, d'une tablette numérique, etc.).

De cette sorte, il est possible d'avoir une estimation plus fiable de la stabilité d'une route en tenant compte des caractéristiques des liens de connectivité de ses segments et de ses nœuds.

Dans un mode particulier de réalisation, lors de l'étape de sélection, la route est sélectionnée en tenant compte en outre :

- d'un type des données transportées par le message ; et/ou
- d'une contrainte en termes de temps de propagation, de latence et/ou de débit entre le premier nœud et le deuxième nœud ; et/ou
- d'une absence ou d'une présence d'au moins un type de lien de connectivité pour les segments de la route.

Ce mode de réalisation permet non seulement de choisir la route qui semble être la plus stable (et donc la plus pérenne) dans le réseau, mais également la route dont les caractéristiques techniques répondent le mieux aux exigences fonctionnelles (par exemple contraintes en terme de temps de propagation, de débit, etc.) de l'application hébergée par le nœud et qui souhaite échanger des données sur le réseau (par exemple, application de visioconférence en temps réel) et d'améliorer ainsi encore davantage l'expérience utilisateur. En outre, cela permet d'optimiser l'utilisation des routes au sein du réseau ad hoc et de réguler le trafic sur ces routes.

Dans un mode particulier de réalisation, lors de l'étape de maintien à jour, la table de routage est maintenue à jour en outre à partir d'informations de routage extraites de messages de données émis sur le réseau ad hoc destinés au premier nœud et/ou de messages de données émis sur le réseau transitant par le premier nœud.

Ceci permet d'une part, d'améliorer la pertinence des informations contenues dans la table de routage, et d'autre part, de faciliter la mise en œuvre du mode de réalisation évoqué précédemment dans lequel la sélection de la route est réalisée en tenant compte également des exigences fonctionnelles des applications hébergées par les nœuds du réseau et qui souhaitent échanger des données sur ce réseau. En effet, les messages de données véhiculés sur le réseau peuvent contenir des informations sur les caractéristiques des nœuds et des segments de route empruntés par ces messages (ex. temps de propagation sur ces segments, latences, durées de vie, etc.) qui permettent d'avoir une connaissance plus précise de ces derniers et permettent une sélection plus pertinente d'une route stable appropriée pour transmettre des données.

On note que l'invention s'applique quel que soit le protocole de routage mis en œuvre au sein du réseau. Elle a toutefois une application privilégiée lorsque ce protocole de routage est un protocole de routage hybride, qui est particulièrement bien adapté lorsque tout ou partie des nœuds du réseau ad hoc sont des nœuds mobiles.

Par exemple, dans un mode particulier de réalisation :

- le réseau ad hoc est organisé en clusters ;
- la table de routage comprend également pour chaque nœud différent du premier nœud appartenant à un dit segment de route, un identifiant d'au moins un cluster du réseau ad hoc auquel appartient ce nœud ;

- le premier nœud utilise un protocole de routage réactif pour émettre des messages de découverte de route à destination de nœuds n'appartenant pas à un cluster auquel il appartient.

Dans ce mode particulier de réalisation, le premier nœud peut en outre utiliser un protocole de routage proactif pour mettre à jour sa table de routage avec des routes lui permettant de joindre les nœuds du cluster auquel il appartient.

Dans un mode particulier de réalisation, les différentes étapes du procédé de sélection sont déterminées par des instructions de programmes d'ordinateurs.

En conséquence, l'invention vise aussi un programme d'ordinateur sur un support d'informations, ce programme étant susceptible d'être mis en œuvre dans un nœud du réseau ou plus généralement dans un ordinateur, ce programme comportant des instructions adaptées à la mise en œuvre des étapes d'un procédé de sélection tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un réseau de communication ad hoc comprenant une pluralité de nœuds conformes à l'invention.

Le réseau de communication ad hoc selon l'invention présente les mêmes avantages cités précédemment que le procédé de sélection et le nœud conformes à l'invention.

En outre, dans un mode particulier de réalisation, les nœuds sont organisés en une pluralité de clusters, ces nœuds étant configurés pour mettre en œuvre un protocole de routage proactif au sein des clusters auxquels ils appartiennent respectivement et un protocole de routage réactif en dehors de ces clusters, chaque cluster comprenant un nœud dit maître désigné pour le cluster apte à émettre des messages de contrôle selon le protocole de routage réactif à destination des nœuds maître des autres clusters, le nœud maître désigné pour un cluster correspondant au nœud parmi les nœuds du cluster qui est le plus stable en termes de connectivité et/ou d'activité au sein du réseau ad hoc.

Une telle désignation des nœuds maîtres pour les clusters permet d'accroître encore davantage la pérennité des routes sélectionnées par les nœuds.

On peut également envisager, dans d'autres modes de réalisation, que le procédé de sélection, le nœud du réseau ad hoc, et le réseau de communication ad hoc selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un réseau de communication ad hoc conforme à l'invention, dans un mode particulier de réalisation ;

- la figure 2 représente l'architecture matérielle d'un nœud conforme à l'invention appartenant au réseau de communication ad hoc de la figure 1, dans un mode particulier de réalisation ;

- la figure 3 illustre un exemple de table de routage maintenue par un nœud du réseau de communication ad hoc de la figure 1 ; et

- la figure 4 représente, sous forme d'ordinogramme, les principales étapes d'un procédé de sélection selon l'invention tel qu'il est mis en œuvre par chaque nœud du réseau de communication ad hoc de la figure 1.

Description détaillée de l'invention

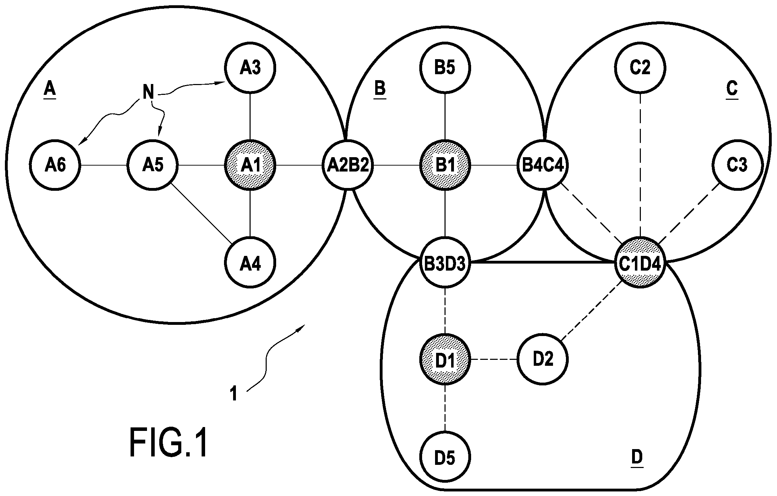

La **figure 1** représente, dans son environnement, un réseau de communication ad hoc 1 conforme à l'invention, dans un mode particulier de réalisation.

Le réseau ad hoc 1 comporte une pluralité de nœuds (référencés de manière générale par N), conformes à l'invention (représentés par des cercles sur la figure 1). Aucune limitation n'est attachée à la nature de ces nœuds à proprement parler : il peut s'agir de n'importe quels dispositifs de communication aptes à communiquer avec d'autres dispositifs comme par exemple des terminaux tels que des tablettes numériques, des téléphones intelligents (ou smartphones), des ordinateurs portables ou fixes, ou des passerelles résidentielles aussi appelées plus couramment « box », des serveurs, etc. Evidemment, l'exemple représenté sur la figure 1 n'est donné qu'à titre illustratif et un nombre différent de nœuds peut être envisagé.

Conformément à l'invention, on distingue les nœuds du réseau ad hoc 1 en fonction de leur degré de mobilité : il peut s'agir de nœuds mobiles, qui sont amenés à se déplacer au cours du temps, comme par exemple un téléphone mobile, une tablette numérique, etc., ou de nœuds fixes qui au contraire ne sont pas destinés à être en mouvement une fois installés (ou seulement de façon exceptionnelle), comme par exemple un point d'accès à un réseau de communication tel un point d'accès WiFI ou une station de base d'un réseau de communication mobile, une passerelle résidentielle ou encore un serveur sédentaire. On note que le caractère fixe ou mobile d'un nœud peut dépendre de sa nature (téléphone portable, ordinateur fixe, box, etc.), mais également de son contexte d'utilisation ; de ce fait, on s'intéresse ici au degré de mobilité supposé ou déclaré de ce nœud (cf. exemples précédents) ou au degré de mobilité constaté de ce nœud. Par exemple, si le nœud n'est pas déplacé pendant une période de temps supérieure à un seuil prédéterminé, ce nœud peut être considéré au sens de l'invention comme étant fixe. Ce peut être le cas par exemple d'un ordinateur portable fixé sur une station d'accueil et utilisé comme un ordinateur fixe.

Les nœuds du réseau ad hoc 1 peuvent communiquer entre eux via différentes technologies permettant d'assurer leur connectivité, comme par exemple des technologies sans fil de type WiFI, WiFI Direct, Bluetooth, Bluetooth Low Energy, cellulaire de type 3G, 4G, 5G, etc. ou filaire de type Ethernet, ADSL, etc. Aucune limitation n'est attachée aux technologies implémentées sur lesquels s'appuient les liens de connectivité établis entre les nœuds au sein du réseau ad hoc 1. Chaque nœud peut utiliser une ou plusieurs de ces technologies d'accès pour communiquer avec ses nœuds voisins ; par exemple un même nœud peut avoir avec un nœud voisin plusieurs liens utilisant chacun des technologies différentes. Dans la suite de la description, on désigne par « nœuds voisins » d'un nœud, les nœuds avec lesquels il dispose d'un lien de connectivité actif. On note que la notion de voisinage n'est pas nécessairement liée à une proximité géographique selon la technologie utilisée sur le lien de connectivité, mais est liée à la portée de cette technologie.

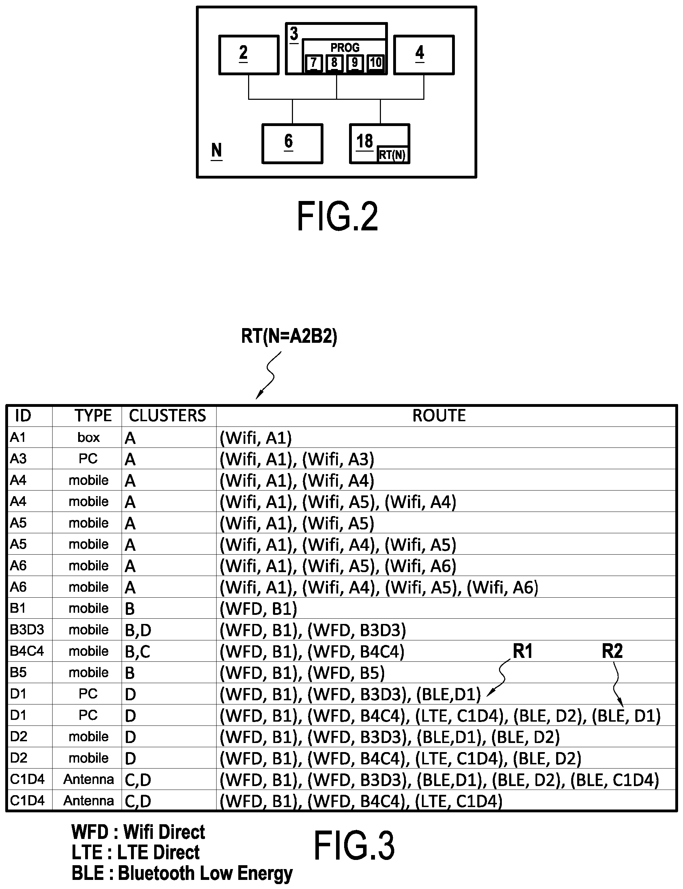

Dans le mode de réalisation décrit ici, chaque nœud N du réseau ad hoc 1 a l'architecture matérielle d'un ordinateur, telle que représentée à la **figure 2.** Il comprend notamment un processeur 2, une mémoire morte 3, une mémoire vive 4, une mémoire non volatile 5, et des moyens de communication 6. Ces moyens de communication 6 permettent au nœud N de communiquer avec les autres nœuds du réseau ad hoc 1, via au moins une interface de connectivité utilisant l'une des technologies évoquées ci-avant (WiFI, WiFI Direct, Bluetooth, Bluetooth Low Energy, 3G, 4G, 5G, Ethernet, ADSL, fibre optique, etc.).

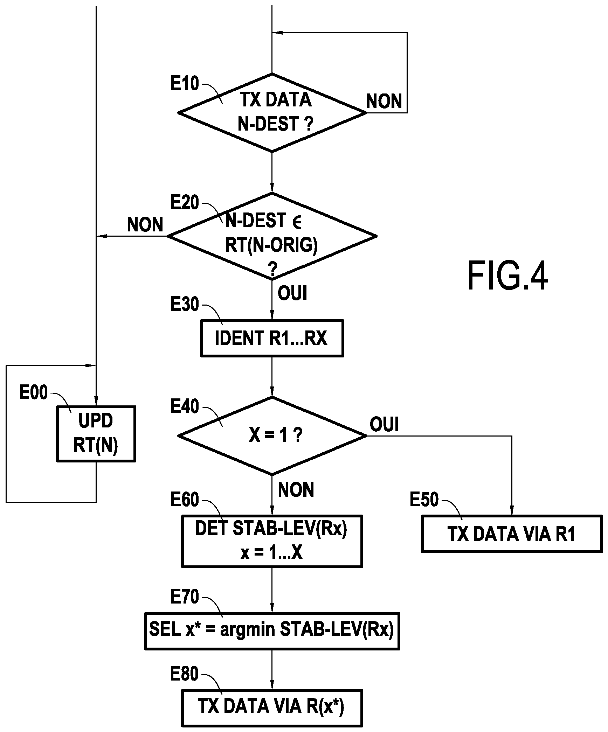

La mémoire morte 3 du nœud N constitue un support d'enregistrement conforme à l'invention, lisible par le processeur 2 et sur lequel est enregistré un programme d'ordinateur PROG conforme à l'invention, comportant des instructions pour l'exécution d'un procédé de sélection d'une route selon l'invention. Le programme PROG définit de façon équivalente divers modules fonctionnels et logiciels du nœud N (à savoir ici, un module de maintien à jour 7, un module d'identification 8, un module de détermination 9 et un module de sélection 10), aptes à mettre en œuvre les étapes du procédé de sélection d'une route selon l'invention, et s'appuyant sur les éléments matériels 2-6 du nœud N décrits précédemment. Ce procédé de sélection est utilisé par chaque nœud N pour sélectionner une route au sein du réseau ad hoc 1 pour router les messages de données qu'il souhaite envoyer aux autres nœuds du réseau ad hoc 1, comme décrit davantage ultérieurement en référence à la figure 4.

Dans l'exemple envisagé à la figure 1, les nœuds du réseau ad hoc 1 sont regroupés en sous-ensembles aussi appelés « clusters ». Plus particulièrement, sur la figure 1, le réseau ad hoc 1 comprend quatre clusters A, B, C, D. Chaque cluster agrège des nœuds situés dans un périmètre géométrique donné et partageant des caractéristiques communes : dans l'exemple de la figure 1, les nœuds appartenant à un même cluster sont reliés entre eux par le même type de lien de connectivité. Par exemple :

- les nœuds A1, A2B2, A3, A4, A5 et A6 appartenant au cluster A sont reliés le cas échéant par un lien de connectivité utilisant la technologie WiFI ;
- les nœuds B1, A2B2, B3, B4C4 et B5 appartenant au cluster B sont reliés le cas échéant par un lien de connectivité utilisant la technologie WiFI Direct ;
- les nœuds C1D4, C2, C3 et B4C4 appartenant au cluster C sont reliés le cas échéant par un lien de connectivité utilisant une technologie radio mobile telle que par exemple une technologie 3G, 4G ou 5G ; et

- les nœuds D1, D2, B3D3, C1D4 et D5 appartenant au cluster D sont reliés le cas échéant par un lien de connectivité utilisant la technologie Bluetooth Low Energy.

Bien entendu, cet exemple n'est donné qu'à titre illustratif et on peut considérer un nombre de clusters différent, un nombre différent de nœuds par cluster, des interfaces de connectivité différentes au sein de chaque cluster, ainsi que des critères différents pour regrouper les nœuds au sein d'un même cluster (par exemple les nœuds regroupés au sein d'un même cluster peuvent partager une même application pair-à-pair, appartenir à une même zone géographique, etc.).

On note en outre qu'un même nœud peut appartenir à différents clusters. C'est le cas par exemple sur la figure 1 des nœuds A2B2 (qui appartient au cluster A et au cluster B), B4C4 (qui appartient au cluster B et au cluster C), C1D4 (qui appartient au cluster C et au cluster D) et B3D3 (qui appartient au cluster B et au cluster D).

Dans chaque cluster A, B, C, D, un nœud est désigné comme nœud maître (aussi appelé « cluster-head » en anglais) (représenté par un cercle hachuré sur la figure 1) : A1 pour le cluster A, B1 pour le cluster B, C1D4 pour le cluster C et D1 pour le cluster D. Dans le mode de réalisation décrit ici, les nœuds maîtres sont désignés au sein de chaque cluster en tenant compte de la stabilité (déclarée, supposée ou constatée) des différents nœuds du cluster. Plus particulièrement, on désigne comme nœud maître d'un cluster, le nœud qui présente la meilleure stabilité en termes de connectivité (en raison notamment de son degré de mobilité (« fixe » ou « mobile ») ou du type de liens de connectivité qu'il entretient avec les autres nœuds du réseau ad hoc) et/ou de son activité au sein du réseau ad hoc (est-ce que des messages sont envoyés sur le réseau ad hoc via ce nœud, etc.). Cette stabilité peut être évaluée à partir de différents critères, comme par exemple :

- un nœud peut déclarer de lui-même aux autres nœuds du cluster qu'il est fixe (et donc *a priori* plus stable qu'un nœud mobile) ;
- un nœud peut être considéré comme stable car il est relié à d'autres nœuds du réseau ad hoc 1 par un lien de connectivité filaire (utilisant par exemple une technologie ADSL ou fibre optique) ;
- un nœud peut être considéré comme stable car il appartient à une route dont la pérennité (c'est-à-dire son ancienneté ou sa durée de vie) est avérée, c'est-à-dire qu'elle perdure et est active depuis une durée de temps supérieure à un seuil prédéterminé,
- un nœud peut être considéré comme stable par définition en raison de sa nature ou de ses fonctions, par exemple il s'agit d'un point d'accès WiFI ou il est attaché à une antenne d'un réseau mobile d'opérateur ou encore il s'agit du chef de groupe (ou « group owner » en anglais) d'un groupe WiFI Direct par exemple, etc.

Une combinaison pondérée de tout ou partie de ces critères (et/ou d'autres critères traduisant la stabilité ou l'absence de stabilité d'un nœud) peut être considérée pour désigner le nœud maître de chaque cluster : cette combinaison pondérée est alors évaluée pour chaque nœud du cluster considéré, puis le nœud qui correspond à la combinaison traduisant la plus grande stabilité est retenu comme nœud maître du cluster. La liste des critères à évaluer et le mécanisme de pondération ne sont pas décrits plus en détail ici.

Dans une variante de réalisation ou s'il s'avère impossible de déterminer le nœud le plus stable du cluster au vu des critères considérés, le nœud maître d'un cluster peut être choisi de manière empirique : il peut être choisi par exemple de manière aléatoire ou encore le premier nœud à l'origine de la constitution du cluster peut être désigné comme nœud maître.

On note que les critères retenus pour désigner le nœud maître, et la combinaison pondérée de ces critères le cas échéant, sont de préférence réévalués à différents instants, par exemple périodiquement, et le nœud maître peut être amené à être modifié si un autre nœud du cluster s'avère être devenu plus stable que le nœud maître courant.

Dans le mode de réalisation décrit ici, les nœuds du réseau ad hoc 1 sont configurés pour mettre en œuvre un protocole de routage hybride basé sur un protocole de routage proactif au sein de leurs clusters et un protocole de routage réactif en dehors de leurs clusters, décrits succinctement ci-après.

A cet effet, chaque nœud du réseau ad hoc 1 est configuré pour envoyer régulièrement (périodiquement) à ses nœuds voisins (i.e. avec lesquels il dispose d'un lien de connectivité actif) dans chaque cluster auquel il appartient, des messages de contrôle et plus particulièrement des messages d'annonce (désignés ici par « Hello ») pour signaler sa présence à ses nœuds voisins. De tels messages d'annonce sont classiquement utilisés dans les protocoles de routage proactifs de l'état de la technique comme par exemple dans les protocoles de routage OLSR et OSPF (Open Shortest Path First). La diffusion et la réception de ces messages « Hello » au sein du cluster permettent à chaque nœud N du cluster de maintenir à jour une table de routage RT(N) répertoriant les routes actives pour joindre chacun des autres nœuds de son cluster. Un exemple d'une telle table de routage RT est illustré à la **figure 3,** pour le nœud N=A2B2 appartenant au cluster A et au cluster B. Elle est par exemple stockée dans la mémoire non volatile 5 du nœud A2B2.

Dans le mode de réalisation décrit ici, la table de routage RT(N) d'un nœud N comprend une pluralité de lignes, chaque ligne étant associée à un nœud « destinataire » du réseau ad hoc 1 (plusieurs lignes pouvant être associées à un même nœud), et une pluralité de colonnes répertoriant :

- l'identifiant du nœud destinataire correspondant à la ligne considérée (cf. référence ID dans la table de routage de la figure 3),
- la nature (ex. « box », « antenne », « PC », « tablette ») ou le degré de mobilité de ce nœud destinataire (ex. fixe ou mobile) (cf. référence « TYPE » sur la figure 3), sachant que comme indiqué précédemment, la nature du nœud destinataire fournit une indication sur son degré de mobilité ;
- le ou les clusters auxquels appartient le nœud destinataire (cf. référence « CLUSTERS » sur la figure 3), et
- la route permettant d'atteindre ce nœud destinataire depuis le nœud N (cf. référence « ROUTE » sur la figure 3) : chaque route comprend un ou plusieurs segments de route, chaque segment de route reliant directement deux nœuds du réseau ad hoc 1 (autrement dit représentant un lien de connectivité entre deux nœuds du réseau ad hoc 1). Elle se présente dans l'exemple de la table de routage RT(N) sous la forme d'une liste de couples, chaque couple correspondant à un segment de la route auquel sont associées des caractéristiques du lien de connectivité mis en œuvre sur ce segment (Wifi, WifiDirect (WFD), LTE Direct (LTE) et Bluetooth Low Energy (BLE) dans l'exemple envisagé sur la figure 3). Ces caractéristiques identifient notamment le type de lien de connectivité existant entre les deux nœuds reliés par le segment (c'est-à-dire ici à la nature de l'interface de connectivité utilisée par les deux nœuds pour communiquer entre eux pair-à-pair). En variante, elles peuvent comprendre d'autres indications comme par exemple un temps de propagation constaté sur ce segment, un débit théorique, une bande passante, une durée de vie dans le réseau ad hoc 1, etc.

Ainsi, dans l'exemple de la table de routage RT (N=A2B2) illustré à la figure 3, le nœud A2B2 est un voisin direct du nœud A1 qui appartient au cluster A et est une box, et dispose d'un lien de connectivité de type « WiFI » avec ce voisin. De façon similaire, d'après la table de routage RT(A2B2), le nœud A2B2 peut joindre le nœud A3 appartenant au cluster A et qui est un ordinateur personnel (PC pour « Personal Computer ») en deux sauts via le nœud A1, les nœuds A1 et A2B2 étant en connexion directe via un lien connectivité de type WiFI, de même que les nœuds A1 et A3, etc.

La table de routage RT(N) maintenue par un nœud N contient donc différentes routes actives au sein du réseau ad hoc 1 permettant au nœud N de joindre d'autres nœuds de ce réseau.

On note qu'aucune limitation n'est attachée à la forme à proprement parler de la table de routage RT(N) maintenue par chaque nœud N du réseau ad hoc 1. Cette table de routage peut prendre des formes différentes de celle illustrée à la figure 3. Par exemple, au lieu de référencer directement les routes permettant au nœud N de joindre un nœud du réseau ad hoc 1, elle peut ne contenir que des segments de route actifs au sein du réseau ad hoc (et pour chaque segment contenir son nœud d'origine, son nœud de fin, et les caractéristiques du lien de connectivité établis entre ces deux nœuds (notamment son type)), charge ensuite au nœud N, via un algorithme approprié, d'identifier les routes composées d'un ou de plusieurs segments actifs répertoriés dans la table de routage lui permettant d'atteindre un nœud donné du réseau ad hoc 1.

Si un nœud appartient en même temps à plusieurs clusters, comme par exemple le nœud A2B2, celui-ci est configuré pour envoyer des messages « Hello » à tous ses voisins de tous les clusters auxquels il appartient (clusters A et B dans l'exemple du nœud A2B2).

Ces messages « Hello » sont relayés de pair en pair dans le cluster de sorte à se propager dans le cluster et atteindre ainsi tous les nœuds du cluster.

Dans le mode de réalisation décrit ici, les messages « Hello » diffusés par les nœuds au sein de leur(s) cluster(s) comprennent les champs suivants :

- un champ « deviceId » contenant un identifiant du nœud à l'origine du message « Hello » ;
- un champ « clusterId » contenant un identifiant du cluster auquel appartient le nœud à l'origine du message « Hello » ;
- un champ « fromId » contenant un identifiant du dernier nœud par lequel a transité le message « Hello », ce champ étant mis à jour à chaque réexpédition du message « Hello » par un nœud du cluster ;
- un champ « hopCount » indiquant le nombre de sauts déjà effectués par le message « Hello » (i.e. nœuds traversés dans le cluster) ;
- un champ « TTL » pour « Time-to-Live » représentant le nombre de sauts restant avant l'arrêt de la propagation du message « Hello » dans le cluster ;
- un champ « deviceType » contenant le type du nœud à l'origine du message « Hello » ; ce champ traduit ici la nature (ex. « box », « antenne », « PC », « tablette », « mobile ») ou le degré de mobilité (fixe ou mobile) du nœud en question ;
- un champ « fromType » contenant le type du dernier nœud par lequel a transité le message « Hello » ; ce champ traduit ici la nature (ex. « box », « antenne », « PC », « tablette ») ou le degré de mobilité (fixe ou mobile) du nœud en question, ce champ étant mis à jour à chaque réexpédition du message « Hello » par un nœud du cluster ;
- un champ « linkType » contenant le type du lien de connectivité du dernier segment de route traversé, ce champ étant mis à jour à chaque réexpédition du message « Hello » par un nœud du cluster. Dans l'exemple illustratif envisagé ici, le type du lien de connectivité peut être Wifi, WifiDirect (WFD), LTE Direct (LTE) ou Bluetooth Low Energy (BLE).

Les champs « deviceType », « fromType », « linkType » permettent aux nœuds du cluster de renseigner leurs tables de routage avec des informations représentatives de la nature ou du degré de mobilité des nœuds du cluster ainsi que du type des liens de connectivité établis au sein du cluster.

Les champs indiqués ci-dessus sont donnés à titre illustratif. En variante, le message « Hello » peut comprendre d'autres champs (en plus ou en moins) que ceux indiqués ci-dessus et permettant aux nœuds de renseigner leurs tables de routage de façon adéquate pour mettre en œuvre l'invention (par exemple le champ « linkType » peut être omis si tous les liens au sein d'un même cluster utilise le même de connectivité, etc.).

Ainsi, dans l'exemple de la figure 1, pour le cluster A et le nœud A6, le nœud A6 est configuré pour envoyer un message « Hello » à son nœud voisin A5 dont le contenu des champs est reproduit ci-dessous :

| deviceId | clusterId | fromId | hopCount | TTL | deviceType | fromType | linkType |
|---|---|---|---|---|---|---|---|
| A6 | A | A6 | 0 | 10 | Mobile | Mobile | Wifi |

Dans un autre mode de réalisation, le message « Hello » peut contenir un champ additionnel contenant les caractéristiques de la route empruntée par le message depuis le nœud à l'origine du message jusqu'au nœud courant (par exemple le nœud A4 peut recevoir un message Hello provenant du nœud A6 et ayant transité par les nœuds A5 et A1 contenant dans ce champ la route (Wifi, A6), (Wifi, A5), (Wifi, A1)).

Quand le nœud A5 reçoit le message « Hello » du nœud A6, il commence par mettre à jour sa table de routage RT(A5) avec les informations contenues dans le message « Hello ».

Dans le mode de réalisation décrit ici, chaque route répertoriée dans la table de routage d'un nœud est associée à un attribut temporel « Timestamp » qui permet de stocker l'heure de réception d'un message impactant cette route (non représenté sur la figure 3). Lorsqu'un message « Hello » est reçu par un nœud, celui-ci détermine si ce message contient une route ou un segment de route correspondant aux informations véhiculées par le message (dans l'exemple décrit ici segment de route lui permettant d'atteindre le nœud A6). Le cas échéant, il met à jour l'attribut temporel associé à cette route ou à ce segment de route avec l'heure de réception du message « Hello ». Sinon, il créée une nouvelle entrée dans la table répertoriant la route ou le segment de route indiqué(e) dans le message « Hello » et lui associe l'heure de réception du message « Hello ».

Puis comme indiqué dans la table ci-dessous, il insère la valeur A5 dans le champ « fromId» du message « Hello », décrémente de 1 le champ « TTL » et incrémente le champ « hopCount » de 1. Le nœud A5 transfère alors le message « Hello » ainsi mis à jour à ses voisins dans le cluster A (i.e. nœuds A1 et A4 dans l'exemple considéré).

| deviceId | clusterId | fromId | hopCount | TTL | deviceType | fromType | linkType |
|---|---|---|---|---|---|---|---|
| A6 | A | A5 | 1 | 9 | Mobile | Mobile | WiFi |

De façon analogue, le nœud A1 reçoit le message « Hello » en provenance du nœud A5, et met à jour sa table de routage RT(A1) comme indiqué ci-avant. Puis, comme indiqué dans la table ci-dessous, il insère la valeur A1 dans le champ « fromId» du message « Hello », décrémente de 1 le champ « TTL », incrémente le champ « hopCount » de 1, et transmet le message ainsi mis à jour vers ses voisins A3, A4 et A2B2 dans le cluster A.

| deviceId | clusterId | fromId | hopCount | TTL | deviceType | fromType | linkType |
|---|---|---|---|---|---|---|---|
| A6 | A | A1 | 2 | 8 | Mobile | box | WiFi |

De son côté, le nœud A4 reçoit le message « Hello » en provenance du nœud A5 et en provenance du nœud A1. Il met à jour sa table de routage RT à partir des messages « Hello » reçus. Mais comme il a déjà reçu ces messages de ses deux seuls voisins dans le cluster A, il ne les retransmet pas.

Enfin les nœuds A3 et A2B2 reçoivent le message « Hello » en provenance de A1, mettent à jour leurs tables de routage respectives à partir des informations contenues dans le message, mais ne le retransfèrent pas : en effet, le nœud A3 n'a pas d'autre voisin dans le cluster A que le nœud A1 dont il a reçu le message « Hello », et le nœud A2B2 a bien un autre voisin (le nœud B1) mais celui-ci n'appartient pas au cluster A.

On note qu'un mécanisme destiné à éviter la retransmission en boucle des messages « Hello » au sein du cluster peut être mis en œuvre ; un tel mécanisme est connu en soi (déjà utilisé dans certains protocoles de routage proactifs) et n'est pas décrit ici. Il utilise par exemple le champ TTL du message « Hello ». Ce champ peut également être utilisé pour éviter que le message « Hello » ne soit propagé trop loin dans le réseau ad hoc 1, et que trop de messages « Hello » inondent le réseau ad hoc 1.

Par ailleurs, il est possible dans une variante de réalisation d'utiliser un protocole de routage proactif différent de celui qui vient d'être décrit au sein de chaque cluster pour remplir les tables de routage des nœuds de chaque cluster, tel que par exemple un protocole de routage proactif connu comme le protocole DSDV, GSR, OLSR, etc.

Comme mentionné précédemment, les nœuds du réseau ad hoc 1 sont configurés pour utiliser un protocole réactif pour échanger des informations avec les nœuds n'appartenant pas à leur cluster.

Plus précisément ici, à cet effet, chaque nœud maître noté MN d'un cluster dispose d'une table de clusters CT(MN) répertoriant les clusters qu'il connaît et les nœuds maîtres de ces clusters. En outre, chaque nœud maître MN d'un cluster est configuré pour envoyer régulièrement (périodiquement) des messages de contrôle, que l'on appellera ici messages « InfoCluster », aux nœuds maîtres des clusters dont il connaît l'existence, autrement dit, répertoriés dans sa table de clusters CT(MN), pour partager notamment avec ces nœuds maîtres les informations dont il dispose sur les clusters dont il connaît l'existence et notamment les nœuds maîtres de ces clusters.

Dans le mode de réalisation décrit ici, les messages « InfoCluster » diffusés par les nœuds maîtres à destination des nœuds maîtres des autres clusters comprennent les champs suivants :

- un champ « deviceId » contenant un identifiant du nœud maître à l'origine du message « InfoCluster » ;
- un champ « clusterId » contenant un identifiant du cluster auquel appartient le nœud maître à l'origine du message « InfoCluster » ;
- un champ « fromDeviceId » contenant un identifiant du dernier nœud maître par lequel a transité le message « InfoCluster », ce champ étant mis à jour à chaque réexpédition du message « InfoCluster » par un nœud maître d'un cluster ;
- un champ « fromClusterId » contenant un identifiant du cluster du dernier nœud maître par lequel a transité le message « InfoCluster », ce champ étant mis à jour à chaque réexpédition du message « InfoCluster » par un nœud maître d'un cluster ;
- un champ « knownClusters » contenant la liste des couples (identifiant de cluster, nœud maître correspondant) connus par le nœud maître à l'origine du message « InfoCluster » ;
- un champ « TTL » pour « Time-to-Live » représentant le nombre de sauts restant (i.e. nœuds maîtres par lesquels transite le message) avant l'arrêt de la propagation du message « InfoCluster ».

Les champs indiqués ci-dessus sont donnés à titre illustratif. En variante, le message « InfoCluster » peut comprendre d'autres champs (en plus ou en moins) que ceux indiqués ci-dessus.

Ainsi, dans l'exemple illustré à la figure 1, si on considère le nœud maître C1D4 du cluster C, celui-ci connaît les clusters B et D, et envoie un message « InfoCluster » au nœud maître B1 et au nœud maître D1 dont le contenu du message est indiqué dans la table ci-dessous :

| deviceId | clusterId | from DeviceId | from ClusterId | knownClusters | TTL |
|----------|-----------|---------------|----------------|----------------|-----|
| C1D4 | C | C1D4 | C | (B, B1), (D, D1) | 3 |

Quand le nœud maître B1 reçoit le message « InfoCluster » du nœud maître C1D4, il commence par mettre à jour sa table de clusters CT(B1) avec les informations contenues dans le message. Par exemple, il met à jour sa table de clusters CT(B1) si le message « InfoCluster » qu'il reçoit contient de nouveaux clusters qu'il ne connaissait pas précédemment (par exemple ici, avec le cluster D et le nœud maître D1 du cluster D, si le nœud maître B1 ne connaissait pas déjà le cluster D) ou si les nœuds maîtres de clusters qu'il connaît ont été modifiés par rapport aux nœuds maîtres identifiés dans sa table de clusters.

Puis il modifie les champs « fromDeviceId», « fromClusterId» et TTL du message « InfoCluster » comme indiqué dans la table ci-dessous et transfère le message aux autres nœuds maîtres de cluster qu'il connaît à l'exception du nœud maître C1D4 dont il a reçu le message, à savoir ici aux nœuds maîtres A1 et D1.

| deviceId | clusterId | from DeviceId | from ClusterId | known Clusters | TTL |
|----------|-----------|---------------|----------------|----------------|-----|
| C1D4 | C | B1 | B | (B, B1), (D, D1) | 2 |

Le nœud maître D1 procède de la même façon que le nœud maître B1 à partir du message « InfoCluster » reçu du nœud maître C1D4.

Le nœud maître A1 reçoit le message « InfoCluster » en provenance du nœud maître B1 et met à jour sa table de cluster CT(A1) en procédant de façon similaire à ce qui a été décrit précédemment pour B1. Il a désormais connaissance de l'existence des clusters B, C, et D, et des nœuds maîtres désignés pour ces clusters.

On note que comme pour les messages « Hello », un mécanisme anti-bouclage peut être mis en œuvre, notamment grâce au champ TTL pour stopper la retransmission d'un message « InfoCluster » en boucle.

Par ailleurs, dans le mode de réalisation décrit ici, on a considéré que chaque nœud maître maintient à jour une table de clusters CT contenant les clusters et les nœuds maîtres des clusters qu'il connaît. Dans une variante de réalisation, non seulement les nœuds maîtres des clusters maintiennent une telle table, mais également les autres nœuds du cluster, cette table contenant les clusters connus du nœud.

Grâce à la table de clusters maintenue par les nœuds maîtres, il est possible comme mentionné précédemment de mettre en œuvre un protocole de routage réactif à l'extérieur de chaque cluster. On suppose ici que chaque nœud au sein d'un cluster connaît le nœud maître de son propre cluster (par exemple via une table de clusters telle que décrite ci-dessus, gérée par le nœud).

Lorsqu'un nœud origine, par exemple le nœud A3 du cluster A, souhaite envoyer un message contenant des données à destination d'un autre nœud du réseau ad hoc 1, par exemple à destination du nœud D2 appartenant au cluster D, celui-ci examine sa table de routage RT(A3) pour déterminer s'il connaît le nœud destinataire D2 et une route permettant d'atteindre ce nœud. Si le nœud D2 est répertorié dans sa table de routage (i.e. il existe au moins une ligne correspondant à ID=D2 dans la table), le nœud A3 identifie la route permettant d'atteindre le nœud D2 (dans l'exemple de la table de routage illustré à la figure 3, il récupère la ou les routes contenues dans la colonne « ROUTE » de sa table et correspondant à un champ « ID » égal à D2), et envoie son message de données au prochain nœud indiqué par la route. Le cas où plusieurs routes sont déterminées est décrit plus en détail ultérieurement en référence à la figure 4.

Si en revanche, le nœud D2 n'est pas répertorié dans sa table de routage, autrement dit, le nœud A3 ne connaît pas de route pour joindre le nœud D2, il envoie un message de contrôle au nœud maître A1 de son cluster conformément à un protocole de routage réactif. Ce message de contrôle est ici une requête RREQ de découverte de route, comprenant une pluralité de champs, à savoir :

- un champ « sequenceNumber » contenant un numéro de séquence permettant de différencier les requêtes RREQ lors de leur passage par un nœud commun ;
- un champ « sourceDeviceId » contenant un identifiant du nœud à l'origine de la requête RREQ ;
- un champ « sourceClusterId » contenant un identifiant du cluster du nœud à l'origine de la requête RREQ ;
- un champ « destDeviceId » contenant un identifiant du nœud destinataire de la requête RREQ (par exemple D2 dans l'exemple envisagé ici de la route pour joindre le nœud D2) ;
- un champ « destClusterId » contenant un identifiant du cluster du nœud destinataire de la requête RREQ (par exemple D dans l'exemple envisagé ici de la route pour joindre le nœud D2) ;
- un champ « hops » contenant la liste des nœuds relayant la requête RREQ ainsi que les caractéristiques des liens de connectivité qu'ils entretiennent avec les nœuds les précédant directement dans la liste. Ces caractéristiques comprennent notamment le type du lien de connectivité, mais peuvent également inclure d'autres caractéristiques du lien comme par exemple le débit théorique de ce lien, le temps de propagation sur le lien, la bande passante disponible, etc. ;
- un champ « hopsCount » indiquant le nombre de sauts déjà effectués par la requête RREQ (i.e. nombre de nœuds intermédiaires traversés) ; et
- un champ « TTL » pour « Time-to-Live » représentant le nombre de sauts restant (i.e. nœuds) avant l'arrêt de la propagation de la requête RREQ.

Les champs indiqués ci-dessus sont donnés à titre illustratif. En variante, le message de contrôle « RREQ » peut comprendre d'autres champs (en plus ou en moins) que ceux indiqués ci-dessus. On note toutefois que le champ « hops » décrit ci-dessus est particulièrement avantageux dans le cadre de l'invention puisqu'il véhicule des informations sur les caractéristiques des liens de connectivité existant entre les nœuds (et notamment sur le type de ces liens de connectivité).

Si le nœud A3 appartient à plusieurs clusters, il envoie une requête RREQ à tous les nœuds maîtres des clusters auxquels il appartient.

Le nœud maître A1 sur réception de la requête RREQ, examine sa table de routage pour déterminer s'il connaît une route jusqu'au nœud D2. Si le nœud D2 est répertorié dans sa table de routage (i.e. il existe au moins une ligne correspondant à ID=D2 dans la table), le nœud maître A1 identifie la route permettant d'atteindre le nœud D2 et l'indique en réponse à la requête RREQ émise par le nœud A3 via un message de contrôle, en l'occurrence ici un message de réponse RREP. Sinon, le nœud maître A1 examine sa table de clusters et transmet alors la requête RREQ aux nœuds maîtres des clusters qu'il connait (ou en variante de ses clusters voisins) après avoir mis à jour les champs « hop », « hopsCount » et « TTL » de la requête, autrement dit dans l'exemple envisagé ici au nœud maître B1 du cluster B, au nœud maître D1 du cluster D et au nœud maître C1D4 du cluster C via les routes indiquées dans sa table de routage pour joindre ces nœuds maîtres.

Sur réception de la requête RREQ provenant du nœud maître A1, le nœud maître B1 examine sa table de routage RT(B1) pour déterminer s'il connaît le nœud D2. Si D2 est répertorié dans une ligne de sa table de routage RT(B1), il récupère la ou les routes correspondantes et la ou les retourne au nœud maître A1 via un message de contrôle, en l'occurrence ici un message de réponse RREP.

Si le nœud maître B1 ne connaît pas de route pour joindre le nœud D2 (D2 n'est pas répertorié dans sa table de routage), le nœud maître B1 transmet la requête RREQ de découverte de route aux nœuds maîtres des clusters qu'il connaît à l'exception du nœud maître A1 (obtenus de sa table de clusters), en l'occurrence ici aux nœuds maîtres D1 et C1D4.

Le nœud maître D1, sur réception de la requête RREQ provenant du nœud maître B1, examine sa table de routage RT(D1) pour déterminer s'il connaît le nœud D2. Comme c'est le cas (D2 appartient à son cluster), il renvoie la ou les routes permettant d'atteindre D2 au nœud maître B1 dans un message de réponse RREP (message de contrôle au sens de l'invention). On suppose ici que le message de réponse RREP a le même format et contient les mêmes champs décrits précédemment que la requête RREQ.

On note que le nœud maître D1 reçoit la requête RREQ de deux nœuds maîtres différents à savoir du nœud maître B1 et du nœud maître A1. Cela peut avantageusement lui permettre de découvrir plusieurs routes ayant des caractéristiques différentes. Le message de réponse RREP est donc également envoyé au nœud maître A1 qui le relaye à son tour jusqu'au nœud A3.

Le nœud maître B1 fait suivre le message de réponse au nœud maître A1, qui le relaye à son tour jusqu'au nœud A3.

Par ailleurs, le nœud maître C1D4 qui a aussi reçu la requête RREQ, connaît également une route pour joindre le nœud D2 (puisqu'il appartient au même cluster D ici). Le nœud maître C1D4 renvoie donc lui aussi la route correspondante au nœud maître B1 dans un message de réponse RREP. Le nœud maître B1 retransmet le message de réponse au nœud maître A1 qui le relaye à son tour vers le nœud A3.

Conformément à l'invention, chaque nœud maître par lequel transite un message de réponse RREP extrait les informations de routage contenues dans ce message et met avantageusement à jour sa table de routage avec ces informations avant de retransmettre le message de réponse vers le nœud (maître) suivant.

Sur réception des deux messages de réponse envoyés respectivement par les nœuds maîtres D1 et C1D4, le nœud A3 met à jour sa table de routage RT(A3). Plus particulièrement il ajoute deux lignes dans sa table de routage RT(A3) (si chacun des messages contient une seule route, sinon autant de lignes que de routes contenues dans les messages de réponse) dans lesquelles il indique les routes communiquées par les nœuds maîtres C1 et C1D4 permettant de joindre le nœud D2. La façon dont le nœud A3 sélectionne l'une de ces routes est décrite plus en détail ultérieurement en référence à la figure 4.

On note qu'il est possible dans une variante de réalisation d'utiliser un protocole de routage réactif différent de celui qui vient d'être décrit pour découvrir des routes en dehors de chaque cluster et remplir les tables de routage des nœuds du réseau ad hoc, tel que par exemple un protocole de routage réactif connu comme le protocole DSR, AODV, etc.

Conformément à l'invention, la table de routage RT(N) d'un nœud N est mise à jour, comme décrit précédemment, grâce aux messages de contrôle « Hello » échangés dans le cadre du protocole de routage proactif mis en œuvre au sein de chaque cluster pour découvrir les routes actives au sein de ce cluster, grâce aux requêtes RREQ et aux réponses RREP à ces requêtes échangées dans le cadre du protocole réactif à l'extérieur des clusters, mais également plus généralement à partir d'informations véhiculées par chaque message de contrôle émis au sein du réseau ad hoc 1 pour permettre le routage des données au sein de celui-ci. Ces messages de contrôle incluent notamment tous les messages de contrôle échangés dans le cadre des protocoles de routage proactif et réactif décrits précédemment, c'est-à-dire, non seulement les messages visant à s'annoncer à ses nœuds voisins (messages « Hello »), les requêtes de découverte de route RREQ et les réponses à ces requêtes RREP, mais également, les messages d'erreur RRER remontés par les nœuds du réseau lorsque par exemple ils détectent qu'un nœud intermédiaire sur une route est devenu injoignable ou qu'un lien de connectivité s'est rompu, etc.

De façon connue au sein d'un réseau ad hoc tel que le réseau ad hoc 1, lors d'un échange de données entre un nœud origine et un nœud destinataire via une route déterminée par le nœud origine grâce à sa table de routage, si l'un des nœuds intermédiaires de la route devient injoignable (par exemple un nœud intermédiaire se déconnecte du réseau ad hoc 1) et un autre nœud de la route détecte le problème, celui-ci est configuré pour envoyer vers le nœud origine un message d'erreur désigné ici par message RERR. A titre illustratif, supposons dans l'exemple de la figure 1 que le nœud A3 échange des données avec le nœud C3 via la route constituée des nœuds A3-A1-A2B2-B1-B4C4-C1D4-C3, et que le nœud B4C4 sorte du réseau ad hoc 1 (par exemple il est déconnecté). La route empruntée par les données échangées entre les nœuds A3 et C3 devient invalide. De ce fait, lorsque le nœud A3 émet un nouveau message de données à destination du nœud C3, quand le message de données arrive sur le nœud B1, le lien vers le nœud B4C4 n'est plus disponible. Le nœud B1 détecte ce problème et renvoie un message d'erreur RERR vers le nœud A3 pour lui signaler le problème.

Dans le mode de réalisation décrit ici, le message d'erreur RERR comprend une pluralité de champs, à savoir :

- un champ « sourceDeviceId » contenant un identifiant du nœud qui a détecté un problème affectant la connectivité de l'un des nœuds du réseau ad hoc 1 (nœud devenu injoignable) et donc qui est à l'origine du message d'erreur RERR ;
- un champ « sourceClusterId » contenant un identifiant du cluster du nœud à l'origine du message d'erreur RERR ;
- un champ « errorDeviceId » contenant un identifiant du nœud devenu injoignable ;
- un champ « errorClusterId » contenant un identifiant du cluster du nœud devenu injoignable ;
- un champ « errorLink » contenant le type du lien de connectivité vers le nœud devenu injoignable qui n'est plus utilisable (pour gérer les cas où un nœud peut être joignable via plusieurs interfaces de connectivité et que seulement l'une d'elles n'est plus utilisable) ;
- un champ « route » qui contient tous les nœuds intermédiaires appartenant à la route devenue invalide ainsi que les caractéristiques des liens de connectivité entre ces nœuds (par exemple sous la forme d'une série de couples comprenant l'identifiant des nœuds et les caractéristiques des liens de connectivité telles que décrites précédemment pour la table de routage).

Les champs indiqués ci-dessus sont donnés à titre illustratif. En variante, le message d'erreur « RRER » peut comprendre d'autres champs (en plus ou en moins) que ceux indiqués ci-dessus. On note toutefois que le champ « errorLink » décrit ci-dessus est particulièrement avantageux dans le cadre de l'invention puisqu'il véhicule des informations sur les caractéristiques du lien de connectivité vers le nœud devenu injoignable.

Tous les nœuds intermédiaires traversés sur la route entre les nœuds B1 et C3, à savoir dans cet exemple les nœuds A2B2 et A1, relaient le message d'erreur RERR émis par le nœud B1 pour signaler la non disponibilité du nœud B4C4 : conformément à l'invention, avant de relayer le message d'erreur vers le nœud suivant sur la route, les nœuds traversés extraient du message d'erreur l'information reflétant la non-disponibilité du nœud B4C4 (contenue dans les champs errorDeviceId, errorClusterId, errorLink notamment, et en profitent pour mettre à jour leurs tables de routage respectives. Cette mise à jour consiste ici à invalider toutes les routes qui transitent par le nœud B4C4 dans leurs tables de routage, autrement dit à supprimer de leurs tables de routage les routes passant par le nœud B4C4. Dans la variante où les tables de routage comprennent uniquement des segments de route reliant directement deux nœuds, cette mise à jour consiste à supprimer des tables de routage les segments dont le nœud origine ou le nœud de fin du segment est le nœud devenu injoignable c'est-à-dire ici le nœud B4C4.

Dans le mode de réalisation décrit ici, les nœuds du réseau ad hoc 1 mettent également à jour leurs tables de routage à partir d'informations de routage véhiculées par les messages de données échangés sur le réseau ad hoc 1 et qui leur sont destinés ou transitent par eux. On pourrait envisager dans un autre mode de réalisation que lorsqu'un nœud maître d'un cluster reçoit un message de contrôle de type message d'erreur, il le propage vers les nœuds de son cluster pour que ceux-ci mettent à jour leurs tables de routage en conséquence.

Dans le mode de réalisation décrit ici, les nœuds du réseau ad hoc 1 mettent également à jour leurs tables de routage à partir d'informations de routage véhiculées par les messages de données échangés sur le réseau ad hoc 1 et qui leur sont destinés ou transitent par eux.

De façon connue, une fois qu'une route a été déterminée dans un réseau ad hoc entre un nœud origine d'un message de données et un nœud destinataire, il existe deux stratégies classiquement mises en œuvre pour s'assurer que le message de données emprunte cette route :

- le message de données contient, par exemple dans un champ de son entête, la liste des identifiants de tous les nœuds intermédiaires de la route à emprunter, ainsi que les caractéristiques des liens de connectivité reliant ces nœuds intermédiaires entre eux (par exemple sous la forme d'une liste de couples comprenant l'identifiant de chaque nœud intermédiaire associé aux caractéristiques du lien de connectivité à utiliser avec ce nœud). Quand un nœud intermédiaire reçoit le message de données, il se contente de le transférer au nœud suivant identifié dans la liste via le lien de connectivité indiqué ; ou
- le message de données contient, par exemple dans un champ de son entête, uniquement l'identifiant du prochain nœud intermédiaire par lequel il doit passer. Quand un nœud intermédiaire reçoit le message de données, celui-ci consulte sa table de routage et détermine le nœud suivant vers lequel envoyer le message.

La première stratégie présente l'avantage d'un temps de traversée des nœuds réduit, car il n'est pas nécessaire à ceux-ci de consulter leurs tables de routage pour relayer le message de données. L'inconvénient toutefois est qu'en cas de route devenue invalide (suite par exemple à la déconnexion d'un nœud intermédiaire), il est nécessaire d'envoyer un message d'erreur RERR au nœud à l'origine du message de données pour que celui-ci choisisse une nouvelle route pour son message de données et le signale en réémettant son message de données avec la nouvelle route choisie. La première stratégie a donc un intérêt privilégié lorsque les nœuds du réseau ad hoc 1 sont stables et que les liens de connectivité entre les nœuds ne sont pas amenés à varier trop souvent dans le temps.

La deuxième stratégie permet en revanche à un nœud intermédiaire qui détecte un problème de connectivité sur la route de la changer en temps réel, et donc de s'adapter à la nouvelle topologie du réseau ad hoc. Le temps de traversée de chaque nœud intermédiaire est toutefois plus long que suivant la première stratégie, car celui-ci doit consulter sa table de routage.

Dans le mode de réalisation décrit ici, on suppose que la première stratégie est mise en œuvre par les nœuds du réseau ad hoc 1 lors de l'envoi de messages de données : chaque nœud à l'origine d'un message de données sélectionne une route dans le réseau ad hoc 1 pour ce message, comme indiqué plus en détail ultérieurement et la signale dans son intégralité dans l'entête du message de données. On note que l'invention en préconisant le choix d'une route maximisant la stabilité des nœuds intermédiaires et des liens de connectivité liant ces nœuds améliore l'efficacité de la première stratégie.

Comme évoqué précédemment, les nœuds du réseau ad hoc 1 mettent également à jour ici leurs tables de routage respectives à partir des informations de routage véhiculées par les messages de données échangés sur le réseau ad hoc 1 et qui leur sont destinés ou transitent par eux. En effet, dans le mode de réalisation décrit ici, chaque message de données contient dans son entête, la liste des nœuds intermédiaires de la route choisie par le nœud à l'origine du message de données, ainsi que le type de lien de connectivité de chaque segment emprunté. Le message de données contient également des informations sur le nœud origine et/ou destination du message. Les nœuds intermédiaires empruntés par le message de données peuvent donc avantageusement exploiter ces informations pour rafraîchir leurs tables de routage.

Typiquement les nœuds intermédiaires peuvent utiliser les informations de routage contenues dans les messages de données qui transitent par eux pour découvrir l'existence de nouveaux nœuds au sein du réseau et les routes pour atteindre ces nouveaux nœuds, étendant ainsi leur connaissance des éléments du réseau ad hoc 1. Mais ils peuvent également mettre à jour leurs tables de routage avec des informations complémentaires permettant d'évaluer la stabilité des routes et/ou leurs activités (par exemple en stockant dans leurs tables de routage des informations complémentaires caractérisant les routes ou les segments répertoriés, comme notamment un paramètre correspondant à la dernière utilisation d'une route ou encore, en mettant à jour un paramètre de durée de vie caractérisant le temps depuis lequel une route existe. Les nœuds intermédiaires peuvent aussi supprimer de leurs tables de routage les routes devenues invalides quand ils transfèrent un message d'erreur émis en réponse à un message de données.

On note que dans le mode de réalisation décrit ici, chaque nœud N du réseau ad hoc 1 maintient une unique table de routage RT(N) référençant tous les nœuds du réseau qu'il connaît. En variante, chaque nœud peut gérer plusieurs tables de routage, par exemple une table de routage pour les nœuds de son cluster et une autre table de routage pour les nœuds externes à son cluster.

Nous allons maintenant décrire, en référence à la **figure 4,** les principales étapes mises en œuvre par un nœud dit d'origine, référencé par N-ORIG, pour sélectionner une route dans le réseau ad hoc 1 lorsqu'il désire échanger des données avec un nœud dit destinataire, référencé par N-DEST, appartenant au réseau ad hoc 1. Ces étapes sont les étapes d'un procédé de sélection selon l'invention telles qu'elles sont mises en œuvre par les modules de maintien à jour 7, d'identification 8, de détermination 9 et de sélection 10 du nœud d'origine N-ORIG conformément à l'invention.

On suppose donc ici qu'un nœud du réseau ad hoc 1 N-ORIG, par exemple le nœud N-ORIG=A2B2, souhaite envoyer un message de données à un nœud destinataire N-DEST du réseau ad hoc 1, par exemple au nœud N-DEST=D1 (étape E10). A cet effet, il consulte, par l'intermédiaire de son module d'identification 8, sa table de routage RT(N-ORIG) dont un exemple pour le nœud A2B2 est illustré à la figure 3 (étape test E20), pour déterminer si celle-ci contient une ou plusieurs routes lui permettant de joindre le nœud destinataire N-DEST.

Comme mentionné précédemment, les nœuds du réseau ad hoc 1, et notamment le nœud N-ORIG, sont configurés pour maintenir à jour leurs tables de routage respectives à partir des informations remontées dans les messages de contrôle et dans les messages de données transitant par eux ou qui leur sont destinés. Ils peuvent à tout moment, si celles-ci ne contiennent pas les routes requises pour atteindre un nœud destinataire avec lequel ils souhaitent échanger des données, les compléter en envoyant un message de découverte de route (requête RREQ) tel que décrit précédemment. Ces différentes mises à jour constituent une étape de maintien à jour au sens de l'invention (étape E00), mise en œuvre par le module de maintien à jour 7 de chaque nœud du réseau ad hoc 1. On comprend bien que les mises à jour de la table de routage d'un nœud ne sont donc pas nécessairement corrélées avec l'envoi d'un message de données par celui-ci, mais elles peuvent être réalisées de manière asynchrone en fonction des messages de contrôle et de données circulant au sein du réseau ad hoc 1 et transitant par le nœud en question ; une mise à jour de la table de routage d'un nœud peut toutefois être déclenchée en relation avec l'envoi d'un message de données par ce nœud à destination d'un nœud destinataire si le nœud ne contient pas dans sa table de routage de route identifiée lui permettant d'atteindre le nœud destinataire (réponse non à l'étape test E20).

Dans l'exemple de la table de routage RT(N-ORIG=A2B2) du nœud N-ORIG=A2B2 donné à la figure 3, il existe deux routes disponibles (i.e. actives) identifiées dans la table qui permettent de joindre le nœud destinataire D1 (réponse oui à l'étape E20) :

- une première route R1 passe par les nœuds B1 et B3D3, avant d'arriver au nœud destinataire D1 ;
- une deuxième route R2 passe par les nœuds B1, B4C4, C1D4 et D2 avant d'arriver au nœud destinataire D1.

La consultation de sa table de routage RT(N-ORIG) permet donc au nœud origine N-ORIG, et plus particulièrement à son module d'identification 8, d'identifier X routes R1,...,RX disponibles pour atteindre le nœud destinataire N-DEST (X désignant un entier supérieur ou égal à 1), avec X=2 dans l'exemple de la figure 3, les deux routes identifiées étant les routes R1 et R2 précitées (étape E30).

Si une seule route R1 est identifiée (X=1, réponse oui à l'étape test E40), le nœud N-ORIG indique ici dans l'entête du message de données qu'il souhaite envoyer au nœud destinataire N-DEST la route R1 ainsi identifiée, et envoie son message de données via cette route au nœud destinataire N-DEST (étape E50), de façon connue en soi et non décrite en détail ici. Le message de données est relayé par les nœuds intermédiaires de la route comme mentionné précédemment, jusqu'au nœud destinataire N-DEST. Chaque nœud intermédiaire met à jour le cas échéant sa table de routage à partir des informations de routage indiquées par le nœud origine N-ORIG dans l'entête du message de données.

Si plusieurs routes disponibles R1,...,RX ont été identifiées par le module d'identification 8 dans la table de routage RT(N-ORIG=A2B2) (i.e. X>1, réponse non à l'étape test E40), conformément à l'invention le nœud N-ORIG, via son module de détermination 9 et son module de sélection 10, sélectionne la route disponible la plus stable au sein du réseau ad hoc 1.

A cet effet, le module de détermination 9 du nœud N-ORIG détermine, pour chaque route disponible Rx, x=1,...,X identifiée dans la table de routage, un niveau de stabilité de la route noté STAB-LEV(Rx) reflétant ici le niveau de stabilité des nœuds de cette route et des liens de connectivité reliant ces nœuds entre eux (étape E60).

Dans le mode de réalisation décrit ici, pour déterminer le niveau de stabilité STAB-LEV(Rx), il a été attribué au préalable à chaque type de lien de connectivité possible, un score de stabilité dit local. Ce score de stabilité local est, dans l'exemple envisagé ici, d'autant plus faible que le lien de connectivité est considéré comme stable. Cette convention n'est bien entendu aucunement limitative et la convention inverse peut être utilisée.

Plus particulièrement, dans le mode de réalisation décrit ici, le score de stabilité local attribué à un lien de connectivité de type filaire est plus faible que le score de stabilité local attribué à un lien de connectivité de type sans fil : le score de stabilité local d'un lien de connectivité de type filaire, au sens de la convention adoptée, est donc meilleur que le score de stabilité local d'un lien de connectivité de type sans fil. On considère par exemple à titre illustratif ici l'attribution des scores de stabilité locaux suivants aux différents liens de connectivité susceptibles d'être utilisés dans le réseau ad hoc 1 :

- liens de connectivité de type filaire :

   ◦ score local de 1 pour un lien optique,
   ◦ score local de 2 pour un lien Ethernet,
   ◦ score local de 3 pour un lien xDSL (Digital Subscriber Line), etc. ;

- liens de connectivité de type sans fil :

   ◦ score local de 10 pour un lien utilisant un réseau mobile (de type 2G, 3G, 4G,...),
   ◦ score local de 11 pour un lien LTE Direct,
   ◦ score local de 20 pour un lien WiFI,
   ◦ score local de 21 pour un lien WiFI Direct,
   ◦ score local de 30 pour un lien Bluetooth, etc.

Bien entendu cet exemple n'est donné qu'à titre illustratif. On note que le score de stabilité local peut en outre dépendre d'un débit théorique associé au lien de connectivité et atteignable sur ce lien. On peut à cet effet définir différentes tranches de débit, par exemple, une tranche DR1 allant de 0 à 1 Mbits/s, une tranche DR2 allant de 1 à 30 Mbit/s, une tranche DR3 allant de 30 à 100 Mbit/s et une tranche DR4 pour les débits supérieurs à 100 Mbit/s et associer un score local à chacune de ces tranches (par exemple, plus le débit est fort sur un lien, plus le score associé est faible), qui vient s'ajouter au score de stabilité local associé aux différents types de liens de connectivité précités pour caractériser le score d'un lien de connectivité.

De façon similaire, un score de stabilité local est associé en fonction du degré de mobilité de chaque nœud du réseau ad hoc 1. A cet effet, un score de stabilité local peut être associé de façon binaire selon si le nœud est considéré comme mobile ou fixe, mais une granularité plus importante peut être obtenue en attribuant, au sein de chaque catégorie (correspondant à un degré de mobilité « fixe » ou à un degré de mobilité de type « mobile »), des scores de stabilité locaux en fonction du type de nœud considéré (ex. selon s'il s'agit d'un téléphone portable, d'une box, d'une station de base associée à une antenne d'un réseau mobile, etc.). On considère ici que les nœuds fixes sont plus stables que les nœuds mobiles, et donc un score de stabilité local plus faible (i.e. meilleur au regard de la convention adoptée) est attribué à un nœud fixe par rapport à un nœud mobile. Par exemple, à titre illustratif :

- pour les nœuds fixes, un score local compris entre 1 et 3 est attribué selon la répartition suivante :

◦ un score local de 1 est attribué à une station de base associée à une antenne radio d'un réseau mobile,

◦ un score local de 2 est attribué à une box d'un opérateur,

◦ un score local de 3 est attribué à un terminal tel qu'un ordinateur fixe ou portable ou un objet connecté type objet IoT (Internet of Things) ;

- pour les nœuds mobiles, un score local de 10 est attribué quel que soit la nature du nœud considéré (téléphone intelligent, tablette numérique, etc.).

Bien entendu cet exemple n'est donné qu'à titre illustratif.

A partir des scores de stabilité locaux attribués aux différents types de liens et aux différents degrés de mobilité possibles des nœuds du réseau ad hoc 1, le module de détermination 9 calcule un score de stabilité global pour chaque route Rx, x=1,...,X disponible identifiée par le module d'identification 8. Ce score de stabilité global reflète le niveau de stabilité STAB-LEV(Rx) de chaque route Rx. Il est calculé ici en sommant les scores de stabilité locaux attribués aux liens de connectivité des segments de la route en fonction de leur type et aux nœuds de cette route en fonction de leur degré de mobilité. Ainsi, dans l'exemple envisagé ici des deux routes R1 et R2 :

$$STAB - LEV(R1) = \underbrace{21 + 10}_{segment\,(A2B2\,,B1)} + \underbrace{21 + 10}_{segment\,(B1\,,B3D3)} + \underbrace{30 + 3}_{segment\,(B3D3\,,D1)}$$

soit STAB-LEV(R1)=95, et :

$$STAB - LEV(R2)$$
$$= \underbrace{21 + 10}_{segment\,(A2B2\,,B1)} + \underbrace{21 + 10}_{segment\,(B1\,,B4C4)} + \underbrace{11 + 1}_{segment\,(B4C4\,,C1D4)} + \underbrace{21 + 10}_{segment\,(C1D4,D2)}$$
$$+ \underbrace{30 + 3}_{segment\,(D2\,,D1)}$$

soit STAB-LEV(R2)=138.

En variante, une somme pondérée des scores locaux attribués aux liens et aux nœuds peut être envisagée avec des poids différents de l'unité (par exemple pour distinguer l'importance de la stabilité des liens par rapport à celles des nœuds, etc.).

Une fois ces deux niveaux de stabilité calculés, le module de sélection 10 du nœud N-ORIG sélectionne la route parmi les routes R1 et R2 présentant la meilleure stabilité (i.e. le meilleur niveau de stabilité), autrement dit avec la convention considérée ici, celle qui correspond au niveau de stabilité calculé le plus faible (étape E70). C'est donc ici la route R1 qui est sélectionnée par le module de sélection 10 pour envoyer le message de données à destination du nœud destinataire N-DEST=D1.

Le nœud N-ORIG indique cette route dans son message de données et l'émet via ses moyens de communication sur le réseau ad hoc 1 à destination du nœud D1, de façon conventionnelle et connue en soi (étape E80).

Dans le mode de réalisation décrit ici la sélection de la route se fait de sorte à maximiser sa stabilité et plus particulièrement la stabilité de ses segments et de ses nœuds. Dans un autre mode de réalisation, outre la stabilité de la route, le module de sélection 10 tient compte également d'autres facteurs pour sélectionner la route sur laquelle envoyer les données destinées au nœud N-DEST ; il peut notamment tenir compte du type des données que le nœud N-ORIG souhaite envoyer au nœud N-DEST et des contraintes temps réel que ce type de données impose. Ces facteurs peuvent être pris en compte lors par exemple du calcul du niveau de stabilité en affectant à chaque route un score d'aptitude à véhiculer ce type de données (destiné à être ajouté au score global de stabilité calculé pour la route). Ce score d'aptitude additionnel peut être fixé en fonction par exemple :

- de la latence attendue sur la route par rapport à une latence minimum à garantir pour les données ;
- du débit offert par la route ;
- du temps de propagation sur la route par rapport à un temps de propagation maximal fixé pour les données (contrainte importante pour les applications temps réel) ;
- de la présence sur la route d'un certain type de connectivité (par exemple, on peut souhaiter privilégier une route stable n'utilisant pas de connectivité Bluetooth).

Ces critères sont évalués par exemple à partir des caractéristiques des liens de connectivité stockées dans la table de routage de chaque nœud. En tout état de cause, les contraintes précitées sont prises en compte en plus de la stabilité de la route, autrement dit, on favorise conformément à l'invention la route la plus stable compte tenu ou non de contraintes additionnelles.

**Revendications**

1. Procédé de sélection d'une route dans un réseau ad hoc (1) destiné à être mis en œuvre par un premier nœud de ce réseau, ledit procédé de sélection comprenant :

   - une étape (E00) de maintien à jour d'une table de routage contenant au moins une route disponible au sein du réseau ad hoc, ladite au moins une route comprenant au moins un segment de route reliant directement entre eux deux nœuds du réseau ad hoc par un lien de connectivité dont un type est identifié dans la table de routage, ledit type étant relatif à une interface de connectivité existant entre lesdits deux nœuds, ladite table de routage comprenant en outre, pour au moins un nœud relié différent dudit premier nœud, une indication concernant un degré de mobilité dudit nœud relié, la table de routage étant maintenue à jour à partir d'informations extraites de messages de contrôle émis sur le réseau ad hoc (1) destinés au premier nœud et de messages de contrôle émis sur le réseau transitant par le premier nœud ;
   - lors de l'envoi (E10) d'un message de données par le premier nœud (N-ORIG) à destination d'un deuxième nœud (N-DEST) du réseau ad hoc :

     ◦ une étape d'identification (E30) en utilisant la table de routage d'au moins une route disponible entre le premier nœud et le deuxième nœud pour envoyer le message de données ; et
     ◦ si plusieurs routes disponibles sont identifiées (E40) :

       ▪ une étape de détermination (E60) de niveaux de stabilité desdites routes disponibles identifiées, à partir des indications concernant le degré de mobilité des nœuds desdites routes et du type des liens de connectivité des segments des routes contenus dans la table de routage ; et
       ▪ une étape de sélection (E70) d'une des routes disponibles identifiées en fonction desdits niveaux de stabilité déterminés.

2. Procédé de sélection selon la revendication 1 comprenant en outre :

   - une étape d'attribution d'un score de stabilité dit local à au moins un type de lien de connectivité et à au moins un type de degré de mobilité susceptibles d'être contenus dans la table de routage ; et
   - une étape de calcul (E60) d'un score de stabilité dit global pour au moins une route disponible identifiée reflétant le niveau de stabilité de cette route, ce score de stabilité global étant calculé à partir d'une somme pondérée des scores de stabilité locaux attribués aux liens de connectivité des segments de cette route en fonction de leur type et aux nœuds de cette route en fonction des indications concernant leur degré de mobilité contenues dans la table.

3. Procédé de sélection selon la revendication 2 dans lequel, lors de l'étape d'attribution :

   - le score de stabilité local attribué à un lien de connectivité de type filaire est meilleur que le score de stabilité local attribué à un lien de connectivité de type sans fil ; et/ou
   - le score de stabilité local attribué à un degré de mobilité de type fixe est meilleur que le score de stabilité local attribué à un degré de mobilité de type mobile.

4. Procédé de sélection selon la revendication 2 ou 3 dans lequel le score de stabilité local attribué à un type de lien de connectivité dépend d'une interface de connectivité utilisée sur ce lien et/ou d'un débit théorique atteignable sur ce type de lien.

5. Procédé de sélection selon l'une quelconque des revendications 1 à 4 dans lequel lors de l'étape de sélection (E80), la route est sélectionnée en tenant compte en outre :

   - d'un type des données transportées par le message ; et/ou
   - d'une contrainte en termes de temps de propagation, de latence et/ou de débit entre le premier nœud et le deuxième nœud ; et/ou
   - d'une absence ou d'une présence d'au moins un type de lien de connectivité pour les segments de la route.

**6.** Procédé de sélection selon l'une quelconque des revendications 1 à 5 dans lequel les messages de contrôle à partir desquels la table de routage est maintenue à jour sont des messages de contrôle d'un protocole de routage réactif comprenant des messages d'annonce, des messages de découverte de routes, des messages de réponse aux messages de découverte et des messages d'erreur signalant une indisponibilité d'un nœud ou d'un lien du réseau ad hoc.

**7.** Procédé de sélection selon l'une quelconque des revendications 1 à 6 dans lequel lors de l'étape (E00) de maintien à jour, la table de routage est maintenue à jour en outre à partir d'informations de routage extraites de messages de données émis sur le réseau ad hoc destinés au premier nœud et/ou de messages de données émis sur le réseau transitant par le premier nœud.

**8.** Procédé de sélection selon l'une quelconque des revendications 1 à 7 dans lequel :

- le réseau ad hoc (1) est organisé en clusters (A,B,C,D) ;
- la table de routage comprend également pour ledit au moins un nœud différent du premier nœud appartenant à un dit segment de route, un identifiant d'au moins un cluster du réseau ad hoc auquel appartient ce nœud ;
- le premier nœud utilise un protocole de routage réactif pour émettre des messages de découverte de route à destination de nœuds n'appartenant pas à un cluster auquel il appartient.

**9.** Programme d'ordinateur (PROG) comportant des instructions pour l'exécution des étapes du procédé de routage selon l'une quelconque des revendications 1 à 8 lorsque ledit programme est exécuté par un ordinateur.

**10.** Support d'enregistrement (3) lisible par un ordinateur sur lequel est enregistré un programme d'ordinateur (PROG) selon la revendication 9.

**11.** Nœud (N-ORIG) d'un réseau ad hoc, dit « premier nœud », comprenant :

- un module (7) de maintien à jour d'une table de routage contenant au moins une route disponible au sein du réseau ad hoc, ladite route comprenant au moins un segment de route reliant directement entre eux deux nœuds du réseau ad hoc par un lien de connectivité dont un type est identifié dans la table de routage, ledit type étant relatif à une interface de connectivité existant entre lesdits deux nœuds, ladite table de routage comprenant en outre, pour au moins un nœud relié différent dudit premier nœud appartenant à un dit segment de route, une indication concernant un degré de mobilité dudit nœud relié, la table de routage étant maintenue à jour à partir d'informations extraites de messages de contrôle émis sur le réseau ad hoc (1) destinés au premier nœud et de messages de contrôle émis sur le réseau transitant par le premier nœud ;
- des modules (8,9,10) activés lors de l'envoi d'un message de données par le premier nœud à destination d'un deuxième nœud (N-DEST) du réseau ad hoc, et comprenant :

  ◦ un module d'identification (8), configuré pour identifier au moins une route disponible entre le premier nœud et le deuxième nœud en utilisant la table de routage maintenue à jour par le module de maintien à jour ;
  ◦ des modules (9,10) activés si plusieurs routes disponibles entre le premier nœud et le deuxième nœud sont identifiées par le module d'identification, ces modules comprenant un module (9) de détermination, configuré pour déterminer pour lesdites routes disponibles identifiées, des niveaux de stabilité à partir des indications concernant le degré de mobilité des nœuds desdites routes et du type des liens de connectivité des segments desdites routes contenus dans la table de routage, et un module de sélection (10) configuré pour sélectionner une desdites routes disponibles identifiées en fonction desdits niveaux de stabilité déterminés.

**12.** Réseau (1) de communication ad hoc comprenant une pluralité de nœuds (N) selon la revendication 11.

**13.** Réseau (1) de communication ad hoc selon la revendication 12 dans lequel les nœuds sont organisés en une pluralité de clusters (A,B,C,D), lesdits nœuds étant configurés pour mettre en œuvre un protocole de routage proactif au sein des clusters auxquels ils appartiennent respectivement et un protocole de routage réactif en dehors de ces clusters, chaque cluster comprenant un nœud dit maître désigné pour le cluster apte à émettre des messages de contrôle selon le protocole de routage réactif à destination des nœuds maître des autres clusters, le nœud maître désigné pour un cluster correspondant au nœud parmi les nœuds du cluster qui est le plus stable en termes de connectivité et/ou d'activité au sein du réseau ad hoc.

**Patentansprüche**

1. Verfahren zum Auswählen einer Route in einem Ad-hoc-Netzwerk (1), das dazu bestimmt ist, von einem ersten Knoten dieses Netzwerks ausgeführt zu werden, wobei das Verfahren zum Auswählen umfasst:

   - einen Schritt (E00) des Aktualisierens einer Routingtabelle, die mindestens eine verfügbare Route innerhalb des Ad-hoc-Netzwerks enthält, wobei die mindestens eine Route mindestens ein Routensegment umfasst, das zwei Knoten des Ad-hoc-Netzwerks direkt miteinander durch eine Konnektivitätsverbindung verbindet, von der ein Typ in der Routingtabelle identifiziert wird, wobei sich der Typ auf eine zwischen den beiden Knoten bestehende Konnektivitätsschnittstelle bezieht, wobei die Routingtabelle ferner, für mindestens einen verbundenen Knoten, der verschieden von dem ersten Knoten ist, eine Angabe bezüglich eines Mobilitätsgrades des verbundenen Knotens umfasst, wobei die Routingtabelle ausgehend von Informationen aktualisiert wird, die aus über das Ad-hoc-Netzwerk (1) gesendeten Hello-Nachrichten, die für den ersten Knoten bestimmt sind, und aus über das Netzwerk gesendeten Hello-Nachrichten, die über den ersten Knoten verlaufen, extrahiert werden;
   - beim Senden (E10) einer Datennachricht durch den ersten Knoten (N-ORIG) an einen zweiten Knoten (N-DEST) des Ad-hoc-Netzwerks:

      o einen Schritt des Identifizierens (E30), unter Verwendung der Routingtabelle, mindestens einer verfügbaren Route zwischen dem ersten Knoten und dem zweiten Knoten zum Senden der Datennachricht; und
      o wenn mehrere verfügbaren Routen identifiziert werden (E40):

         ▪ einen Schritt des Bestimmens (E60) von Stabilitätsniveaus der identifizierten verfügbaren Routen ausgehend von den Angaben bezüglich des Mobilitätsgrades der Knoten der Routen und vom Typ der Konnektivitätsverbindungen der Segmente der Routen, die in der Routingtabelle enthalten sind; und
         ▪ einen Schritt des Auswählens (E70) einer der identifizierten verfügbaren Routen in Abhängigkeit von den bestimmten Stabilitätsniveaus.

2. Verfahren zum Auswählen nach Anspruch 1, umfassend ferner:

   - einen Schritt des Zuweisen eines sogenannten lokalen Stabilitätsscores zu mindestens einem Konnektivitätsverbindungstyp und zu mindestens einem Mobilitätsgradtyp, die in der Routingtabelle enthalten sein können; und
   - einen Schritt des Berechnens (E60) eines sogenannten globalen Stabilitätsscores für mindestens eine identifizierte verfügbare Route, der das Stabilitätsniveau dieser Route widerspiegelt, wobei dieser globale Stabilitätsscore ausgehend von einer gewichteten Summe der lokalen Stabilitätsscores, die den Konnektivitätsverbindungen der Segmente dieser Route in Abhängigkeit von ihrem Typ und den Knoten dieser Route in Abhängigkeit von den Angaben bezüglich ihres Mobilitätsgrades, die in der Tabelle enthalten sind, zugewiesen sind, berechnet wird.

3. Verfahren zum Auswählen nach Anspruch 2, bei dem beim Schritt des Zuweisens:

   - der lokale Stabilitätsscore, der einer Konnektivitätsverbindung vom Typ drahtgebunden zugewiesen ist, besser ist als der lokale Stabilitätsscore, der einer Konnektivitätsverbindung vom Typ drahtlos zugewiesen ist; und/oder
   - der lokale Stabilitätsscore, der einem Mobilitätsgrad vom Typ ortsfest zugewiesen ist, besser ist als der lokale Stabilitätsscore, der einem Mobilitätsgrad vom Typ mobil zugewiesen ist.

4. Verfahren zum Auswählen nach Anspruch 2 oder 3, bei dem der lokale Stabilitätsscore, der einem Konnektivitätsverbindungstyp zugewiesen ist, von einer auf dieser Verbindung verwendeten Konnektivitätsschnittstelle und/oder von einer auf diesem Verbindungstyp theoretisch erreichbaren Übertragungsrate abhängt.

5. Verfahren zum Auswählen nach einem der Ansprüche 1 bis 4, bei dem beim Schritt des Auswählens (E80) die Route ferner ausgewählt wird unter Berücksichtigung:

   - eines Typs der von der Nachricht transportierten Daten; und/oder
   - einer Beschränkung im Hinblick auf Laufzeit, Latenz und/oder Übertragungsrate zwischen dem ersten Knoten und dem zweiten Knoten; und/oder
   - eines Nichtvorhandenseins oder eines Vorhandenseins mindestens eines Konnektivitätsverbindungstyps für die Segmente der Route.

6. Verfahren zum Auswählen nach einem der Ansprüche 1 bis 5, bei dem die Hello-Nachrichten, ausgehend von welchen die Routingtabelle aktualisiert wird, Hello-Nachrichten eines reaktiven Routingprotokolls sind, das Ankündigungsnachrichten, Routen-Discovery-Nachrichten, Antwortnachrichten auf die Routen-Discovery-Nachrichten und Fehlernachrichten, die eine Nichtverfügbarkeit eines Knotens oder einer Verbindung des Ad-hoc-Netzwerks signalisieren, umfassen.

7. Verfahren zum Auswählen nach einem der Ansprüche 1 bis 6, bei dem bei dem Schritt (E00) des Aktualisierens die Routingtabelle ferner ausgehend von Routinginformationen aktualisiert wird, die aus über das Ad-hoc-Netzwerk gesendeten Datennachrichten, die für den ersten Knoten bestimmt sind, und/oder aus über das Netz gesendeten Datennachrichten, die über den ersten Knoten verlaufen, extrahiert werden.

8. Verfahren zum Auswählen nach einem der Ansprüche 1 bis 7, bei dem:

   - das Ad-hoc-Netzwerk (1) in Cluster (A,B,C,D) organisiert ist;
   - die Routingtabelle für den mindestens einen Knoten, der verschieden von dem ersten Knoten ist, der zu einem Routensegment gehört, auch eine Kennung mindestens eines Clusters des Ad-hoc-Netzwerk umfasst, zu dem dieser Knoten gehört;
   - der erste Knoten ein reaktives Routingprotokoll verwendet, um Routen-Discovery-Nachrichten an Knoten zu senden, die nicht zu einem Cluster gehören, zu dem er gehört.

9. Computerprogramm (PROG), das Anweisungen umfasst, die bei Ausführung des Programms durch einen Computer die Schritte des Routingverfahrens nach einem der Ansprüche 1 bis 8 ausführen.

10. Computerlesbarer Datenträger (3), auf dem ein Computerprogramm (PROG) nach Anspruch 9 gespeichert ist.

11. Knoten (N-ORIG) eines Ad-hoc-Netzwerks, "erster Knoten" genannt, umfassend:

   - ein Modul (7) zur Aktualisierung einer Routingtabelle, die mindestens eine verfügbare Route innerhalb des Ad-hoc-Netzwerks enthält, wobei die Route mindestens ein Routensegment umfasst, das zwei Knoten des Ad-hoc-Netzwerks direkt miteinander durch eine Konnektivitätsverbindung verbindet, von der ein Typ in der Routingtabelle identifiziert wird, wobei sich der Typ auf eine zwischen den beiden Knoten bestehende Konnektivitätsschnittstelle bezieht, wobei die Routingtabelle ferner, für mindestens einen verbundenen Knoten, der verschieden von dem ersten Knoten ist, der zu einem Routensegment gehört, eine Angabe bezüglich eines Mobilitätsgrades des verbundenen Knotens umfasst, wobei die Routingtabelle ausgehend von Informationen aktualisiert wird, die aus über das Ad-hoc-Netzwerk (1) gesendeten Hello-Nachrichten, die für den ersten Knoten bestimmt sind, und aus über das Netzwerk gesendeten Hello-Nachrichten, die über den ersten Knoten verlaufen, extrahiert werden;
   - Module (8,9,10), die beim Senden einer Datennachricht durch den ersten Knoten an einen zweiten Knoten (N-DEST) des Ad-hoc-Netzwerks aktiviert werden, und umfassen:

      o ein Identifizierungsmodul (8), das dazu ausgestaltet ist, mindestens eine verfügbare Route zwischen dem ersten Knoten und dem zweiten Knoten unter Verwendung der von dem Aktualisierungsmodul aktualisierten Routingtabelle zu identifizieren;
      o Module (9,10), die aktiviert werden, wenn von dem Identifizierungsmodul mehrere verfügbare Routen zwischen dem ersten Knoten und dem zweiten Knoten identifiziert werden, wobei diese Module ein Bestimmungsmodul (9) umfassen, das dazu ausgestaltet ist, für die identifizierten verfügbaren Routen Stabilitätsniveaus ausgehend von den Angaben bezüglich des Mobilitätsgrades der Knoten der Routen und vom Typ der Konnektivitätsverbindungen der Segmente der Routen, die in der Routingtabelle enthalten sind, zu bestimmen, und ein Auswahlmodul (10), das dazu ausgestaltet ist, eine der identifizierten verfügbaren Routen in Abhängigkeit von den bestimmten Stabilitätsniveaus auszuwählen.

12. Ad-hoc-Kommunikationsnetzwerk (1), das eine Mehrzahl von Knoten (N) nach Anspruch 11 umfasst.

13. Ad-hoc-Kommunikationsnetzwerk (1) nach Anspruch 12, bei dem die Knoten in eine Mehrzahl von Clustern (A,B,C,D) organisiert sind, wobei die Knoten dazu ausgestaltet sind, ein proaktives Routingprotokoll innerhalb der Cluster, zu denen sie jeweils gehören, und ein reaktives Routingprotokoll außerhalb dieser Cluster auszuführen, wobei jeder Cluster einen für den Cluster designierten sogenannten Master-Knoten umfasst, der geeignet ist, Hello-Nachrichten nach dem reaktiven Routingprotokoll an Master-Knoten der anderen Cluster zu senden, wobei der für einen Cluster

**EP 3 804 408 B1**

designierte Muster-Knoten dem Knoten unter den Knoten des Clusters entspricht, der im Hinblick auf Konnektivität und/oder Aktivität innerhalb des Ad-hoc-Netzwerks am stabilsten ist.

**Claims**

1. Method for selecting a route in an ad hoc network (1) which is intended to be implemented by a first node of this network, said selection method comprising:

   - a step (E00) of keeping a routing table containing at least one available route within the ad hoc network up to date, said at least one route comprising at least one route segment directly linking two nodes of the ad hoc network together by means of a connectivity link, a type of which is identified in the routing table, said type relating to a connectivity interface existing between said two nodes, said routing table further comprising, for at least one linked node which is different from said first node, an indication relating to a degree of mobility of said linked node, the routing table being kept up to date on the basis of information extracted from control messages transmitted over the ad hoc network (1) which are intended for the first node and from control messages transmitted over the network passing through the first node;
   - when a data message is sent (E10) by the first node (N-ORIG) to a second node (N-DEST) of the ad hoc network:

     ○ a step (E30) of identifying, using the routing table, at least one available route between the first node and the second node for sending the data message; and
     ○ if several available routes are identified (E40):

       ▪ a step (E60) of determining stability levels of said identified available routes, on the basis of indications relating to the degree of mobility of the nodes of said routes and the type of connectivity links of the segments of the routes contained in the routing table; and
       ▪ a step (E70) of selecting one of the identified available routes depending on said determined stability levels.

2. Selection method according to Claim 1, further comprising:

   - a step of assigning a stability score referred to as local to at least one type of connectivity link and to at least one type of degree of mobility which are likely to be contained in the routing table; and
   - a step (E60) of calculating a stability score referred to as global for at least one identified available route reflecting the stability level of this route, this global stability score being calculated on the basis of a weighted sum of the local stability scores which are assigned to the connectivity links of the segments of this route depending on their type and to the nodes of this route depending on the indications relating to their degree of mobility which are contained in the table.

3. Selection method according to Claim 2, wherein, during the assignment step:

   - the local stability score assigned to a wired connectivity link is better than the local stability score assigned to a wireless connectivity link; and/or
   - the local stability score assigned to a fixed degree of mobility is better than the local stability score assigned to a mobile degree of mobility.

4. Selection method according to Claim 2 or 3, wherein the local stability score assigned to a type of connectivity link depends on a connectivity interface used over this link and/or on a theoretical throughput which can be achieved over this type of link.

5. Selection method according to any one of Claims 1 to 4, wherein, during the selection step (E80), the route is selected further taking into account:

   - a type of data carried by the message; and/or
   - a constraint in terms of propagation time, latency and/or throughput between the first node and the second node; and/or
   - an absence or a presence of at least one type of connectivity link for the segments of the route.

6.  Selection method according to any one of Claims 1 to 5, wherein the control messages on the basis of which the routing table is kept up to date are control messages of a reactive routing protocol comprising announcement messages, route discovery messages, response messages in response to the discovery messages and error messages indicating that a node or link of the ad hoc network is unavailable.

7.  Selection method according to any one of Claims 1 to 6, wherein, during the keeping up to date step (E00), the routing table is further kept up to date on the basis of routing information extracted from data messages transmitted over the ad hoc network which are intended for the first node and/or from data messages transmitted over the network passing through the first node.

8.  Selection method according to any one of Claims 1 to 7, wherein:

    - the ad hoc network (1) is organized in clusters (A,B,C,D);
    - the routing table also comprises, for said at least one node which is different from the first node belonging to a said route segment, an identifier of at least one cluster of the ad hoc network to which this node belongs;
    - the first node uses a reactive routing protocol to transmit route discovery messages to nodes not belonging to a cluster to which it belongs.

9.  Computer program (PROG) comprising instructions for executing the steps of the routing method according to any one of Claims 1 to 8 when said program is executed by a computer.

10. Computer-readable storage medium (3) on which a computer program (PROG) according to Claim 9 is stored.

11. Node (N-ORIG) of an ad hoc network, referred to as the "first node", comprising:

    - a module (7) for keeping a routing table containing at least one available route within the ad hoc network up to date, said route comprising at least one route segment directly linking two nodes of the ad hoc network together by means of a connectivity link, a type of which is identified in the routing table, said type relating to a connectivity interface existing between said two nodes, said routing table further comprising, for at least one linked node which is different from said first node belonging to a said route segment, an indication relating to a degree of mobility of said linked node, the routing table being kept up to date on the basis of information extracted from control messages transmitted over the ad hoc network (1) which are intended for the first node and from control messages transmitted over the network passing through the first node;
    - modules (8,9,10) activated when a data message is sent by the first node to a second node (N-DEST) of the ad hoc network, and comprising:

        o an identification module (8), configured to identify at least one available route between the first node and the second node using the routing table kept up to date by the keeping up to date module;
        ○ modules (9,10) activated if several available routes between the first node and the second node are identified by the identification module, these modules comprising a determination module (9) configured to determine, for said identified available routes, stability levels on the basis of indications relating to the degree of mobility of the nodes of said routes and the type of connectivity links of the segments of said routes contained in the routing table, and a selection module (10) configured to select one of said identified available routes depending on said determined stability levels.

12. Ad hoc communication network (1) comprising a plurality of nodes (N) according to Claim 11.

13. Ad hoc communication network (1) according to Claim 12, wherein the nodes are organized in a plurality of clusters (A,B,C,D), said nodes being configured to implement a proactive routing protocol within the clusters to which they respectively belong and a reactive routing protocol outside these clusters, each cluster comprising a node referred to as the master node designated for the cluster which is able to transmit control messages according to the reactive routing protocol to the master nodes of the other clusters, the designated master node for a cluster corresponding to the node among the nodes of the cluster that is the most stable in terms of connectivity and/or activity within the ad hoc network.

FIG.1

## FIG.2

**RT(N=A2B2)**

| ID | TYPE | CLUSTERS | ROUTE |
|---|---|---|---|
| A1 | box | A | (Wifi, A1) |
| A3 | PC | A | (Wifi, A1), (Wifi, A3) |
| A4 | mobile | A | (Wifi, A1), (Wifi, A4) |
| A4 | mobile | A | (Wifi, A1), (Wifi, A5), (Wifi, A4) |
| A5 | mobile | A | (Wifi, A1), (Wifi, A5) |
| A5 | mobile | A | (Wifi, A1), (Wifi, A4), (Wifi, A5) |
| A6 | mobile | A | (Wifi, A1), (Wifi, A5), (Wifi, A6) |
| A6 | mobile | A | (Wifi, A1), (Wifi, A4), (Wifi, A5), (Wifi, A6) |
| B1 | mobile | B | (WFD, B1) |
| B3D3 | mobile | B,D | (WFD, B1), (WFD, B3D3) |
| B4C4 | mobile | B,C | (WFD, B1), (WFD, B4C4) |
| B5 | mobile | B | (WFD, B1), (WFD, B5) |
| D1 | PC | D | (WFD, B1), (WFD, B3D3), (BLE,D1) |
| D1 | PC | D | (WFD, B1), (WFD, B4C4), (LTE, C1D4), (BLE, D2), (BLE, D1) |
| D2 | mobile | D | (WFD, B1), (WFD, B3D3), (BLE,D1), (BLE, D2) |
| D2 | mobile | D | (WFD, B1), (WFD, B4C4), (LTE, C1D4), (BLE, D2) |
| C1D4 | Antenna | C,D | (WFD, B1), (WFD, B3D3), (BLE,D1), (BLE, D2), (BLE, C1D4) |
| C1D4 | Antenna | C,D | (WFD, B1), (WFD, B4C4), (LTE, C1D4) |

R1      R2

**WFD : Wifi Direct**
**LTE : LTE Direct**
**BLE : Bluetooth Low Energy**

## FIG.3

FIG.4

**RÉFÉRENCES CITÉES DANS LA DESCRIPTION**

**Documents brevets cités dans la description**

- US 2012134298 A
- US 2004029553 A

**Littérature non-brevet citée dans la description**

- **XIANFENG LI et al.** LEPR : Link Stability Estimation-based Preemptive Routing protocol for Flying Ad Hoc Networks. *IEEE SYMPOSIUM ON COMPUTERS AND COMMUNICATIONS (ISCC)*, 2017